# EUROPEAN PATENT APPLICATION

(11) **EP 2 351 935 A1**
(43) Date of publication of application: **03.08.2011**
(21) Application number: 08877567.1
(22) Date of filing: 14.11.2008
(51) Int. Cl.: F04D 29/38

(54) **PROPELLER FAN, FLUID FEEDER AND MOLD**

(30) Priority: 22.10.2008 JP 2008272314; 22.10.2008 JP 2008272354
(71) Applicant: Sharp Kabushiki Kaisha, Osaka-shi, Osaka 545-8522 (JP)
(72) Inventor: YASUKATA TAKEDA, Osaka 545-8522 (JP); MASAKI OHTSUKA, Osaka 545-8522 (JP)
(74) Representative: Treeby, Philip David William
(86) International application number: PCT/JP2008/070759
(87) International publication number: WO 2010/047001

(57) **Abstract**

In a propeller fan, a plurality of blades (21A and 21B) for blowing are coupled together with a space in a rotational direction kept therebetween, and a coupled region has a form for performing the blowing according to the rotation thereof. This structure provides a propeller fan greatly contributing to energy-saving properties and resource-saving design.

## Description

### TECHNICAL FIELD

The present invention relates to a propeller fan, a fluid feeder and a molding die, and particularly to a propeller fan for an air blower, a molding die for molding the propeller fan from resin and a fluid feeder provided with the propeller fan such as an outdoor unit of an air conditioner, an air purifier, a humidifier, a fan heater, a cooling device and a ventilating device.

### BACKGROUND ART

In connection with conventional propeller fans, for example, Japanese Patent Laying-Open No. 3-88999 has disclosed an axial fan aimed at increasing a lifting power of propeller blades and also increasing a strength thereof by supplying, in a separated fashion, positive and negative pressures to positive and suction surfaces of each propeller blade, respectively (Patent Document 1). The axial fan disclosed in Patent Document 1 has a plurality of propeller blades that are formed on an outer periphery of a hub and extend radially outward from an axis of the hub.

Japanese Patent Laying-Open No. 2000-314399 has disclosed a propeller fan aimed at eliminating necessity of after-treatment on a boss having a rotation axis aperture, and improving gate processing (Patent Document 2). The propeller fan disclosed in Patent Document 2 has the hub of a cylindrical or a circular-conical form as well as blades formed integrally with the hub.

Japanese Patent Laying-Open No. 6-74196 has disclosed a propeller fan aimed at providing a form of a hub that improves air flowing, exhibiting a good performance in connection with improvement of forms of blades and a head, a rib and a boss of the hub, allowing an easy manufacturing operation, improving a stacking property and an improved strength, and exhibiting a good transporting property (Patent Document 3). The propeller fan disclosed in Patent Document 3 has a boss arranged at a center of rotation. The boss has an outer surface formed of a large round head and a cylindrical portion. In a manufacturing process of the propeller fan, the round head serves as a guide so that the manufactured propeller fans can be successively and deeply stacked on each other.

Japanese Patent Laying-Open No. 5-133392 has disclosed an axial blade wheel that is aimed at achieving an inexpensive and efficient packing without impeding any blowing performance (Patent Document 4). In the axial blade wheel disclosed in Patent Document 4, a radius of a hub on an intake side is partially reduced, and each end of the hub has a round from.
Patent Document 1: Japanese Patent Laying-Open No. 3-88999
Patent Document 2: Japanese Patent Laying-Open No. 2000-314399
Patent Document 3: Japanese Patent Laying-Open No. 6-74196
Patent Document 4: Japanese Patent Laying-Open No. 5-133392

### DISCLOSURE OF THE INVENTION

### PROBLEMS TO BE SOLVED BY THE INVENTION

Conventionally, propeller fans have been used in air blowers and refrigeration machines. For example, an outdoor unit of an air conditioner is provided with a propeller fan for blowing air on a heat exchanger. The propeller fan has such characteristics that the blowing capacity near a center of the fan where a peripheral speed is low is smaller than that on a radially outer side of the fan. Due to such characteristics, when a resistance object causing a large pressure loss such as a heat exchanger is arranged in an air flow passage, the air flows forward on the radially outer side of the fan, but a reverse flow occurs near the center of the fan This results in a problem that pressure-flow rate characteristics (i.e., characteristics relating to a pressure and a flow rate) of the fan deteriorate in a high static-pressure range.

Also, as disclosed in the foregoing patent documents, such a structure of the propeller fan has been known that a large boss hub is arranged at the center of rotation, and the plurality of blades extend from the outer periphery of the boss hub. In these propeller fans, since the large boss hub closes a reverse flow region near the center of the fan, it is possible to prevent reverse flow and to suppress deterioration of the pressure-flow rate characteristics of the fan near a high static-pressure range. Usually, the blade has an attack angle. Therefore, base portions of the blades exhibit a twisted positional relationship if the base portions of the blades extend as there are. However, the provision of the large boss hub facilitates the integral formation of the plurality of blades that perform the air blowing.

However, the above propeller fan with the large boss hub suffers from a plurality of problems described below.

A first problem is as follows. It is possible to suppress the deterioration of the pressure-flow rate characteristics in the high static-pressure range to a certain extent. However, the rotation center portion cannot be sufficiently and effectively utilized in a range of a low pressure and a large air flow rate, resulting in a problem that a blowing efficiency is low. A second problem is as follows. The provision of the large boss hub increases a mass of the propeller fan, and therefore increases the load on a drive motor, resulting in a problem of increased power consumption. A third problem is increase in material cost and therefore increase in manufacturing cost. These three problems result in remarkable disadvantages in energy-saving properties and resource-saving design in view of recent consideration of global environment.

As disclosed in above Patent Documents 3 and 4, the propeller fan requires the structure that allows stable stacking of the plurality of propeller fans in the direction of its rotation axis when the manufactured propeller fans are to be stored or transported.

Accordingly, an object of the invention is to overcome the above problems, and particularly to provide a propeller fan greatly contributing to energy-saving properties and resource-saving design. Another object of the invention is to overcome the above problems, and particularly to provide a propeller fan that greatly contributes to energy-saving properties and resource-saving design, and allows stacking for storing, transporting and the like.

### MEANS FOR SOLVING THE PROBLEMS

A propeller fan according to the invention is a propeller fan in which a plurality of blades for blowing are coupled together with a space kept in a rotational direction therebetween, and a coupled region has a form for performing the blowing according to rotation.

According to the propeller fan thus configured, since the region where the plurality of blades are coupled together has the form for performing the blowing (i.e., creating an air flow), the blowing in a forward direction can be performed even near a rotation center of the blades so that a blowing capacity can be improved. This can implement the propeller fan greatly contributing to energy-saving properties and resource-saving design.

Preferably, the coupled region has a blade-surface-like form for performing the blowing according to the rotation. According to the propeller fan thus configured, the region coupling the plurality of blades and having the blade-surface-like form can contribute to the blowing.

Preferably, the propeller fan is integrally provided with a member for performing rotational driving around the coupled region. This configuration can simplify the structure of the propeller fan.

Preferably, the plurality of blades and the coupled region are integrally molded to form the propeller fan. This configuration can simplify the structure of the propeller fan.

A propeller fan according to another aspect of the invention includes a plurality of blades circumferentially spaced from each other for performing blowing according to rotation; and a connection portion having a blade-surface-like surface for performing the blowing according to the rotation, and connecting base portions of the plurality of neighboring blades.

According to the propeller fan thus configured, since the blade-surface-like surface formed on the connection portion contributes to the blowing, the blowing in a forward direction can be performed even near a rotation center of the blades so that a blowing capacity can be improved. This can implement the propeller fan greatly contributing to energy-saving properties and resource-saving design.

Preferably, the connection portion extends radially outward from a rotation shaft for driving and rotating the propeller fan.

In the propeller fan thus configured, it is possible to increase an area of the blade surfaces contributing to the blowing, to reduce a size of the rotation shaft and to reduce a mass of the propeller fan. Thereby, it is possible to reduce a power required for driving the propeller fan, and the structure can greatly contribute to energy-saving properties and resource-saving design.

Preferably, the connection portion forms the blade-surface-like surface. The propeller fan thus configured effectively uses the blade-surface-like surface formed on the connection portion, and thereby can improve the blowing capacity.

Preferably, the plurality of blades and the connection portion form a blade surface having an integral and continuously smooth form. According to the propeller fan thus configured, the blades and the connection portion form the blade surface having an integral and continuously smooth form, and this blade surface contributes to the blowing so that the blowing capacity can be significantly improved.

Preferably, the propeller fan further includes a rotation shaft arranged coaxially to a rotation center of the blades and protruding from the connection portion toward at least one of the intake side and the outlet side. Preferably, when the propeller fan is viewed in the direction of the rotation axis, a minimum distance from the rotation axis to an outer periphery of the connection portion on a line perpendicularly crossing the rotation axis is longer than a distance from the rotation axis to the outer periphery of the rotation shaft on the line. According to the propeller fan thus configured, it is possible to increase an area of the blade surfaces contributing to the blowing, to reduce a size of the rotation shaft and to reduce a mass of the propeller fan. Thereby, it is possible to reduce a power required for driving the propeller fan, and the structure can greatly contribute to energy-saving properties and resource-saving design.

Preferably, the blade has a front edge located on a forward side in the rotational direction and a rear edge located on the opposite side in the rotational direction. A base portion of the front edge of a first blade included among the plurality of blades is connected to a base portion of the rear edge of a second blade neighboring to the first blade. Preferably, the connection portion extends from the intake side toward the outlet side as the position moves from the base portion of the front edge toward the base portion of the rear edge. Preferably, the connection portion continues to the blade surface of the blade and extends in a blowing direction from the intake side toward the outlet side as the position moves from the base portion of the front edge toward the base portion of the rear edge. Preferably, the connection portion is configured to have a function of blowing air in the blowing direction of the propeller fan from the intake side to the outlet side.

According to the propeller fan thus configured, the connection portion connects the base portions of the plurality of neighboring blades together, and such a fan form is implemented that the blade-surface-like surface formed on the connection portion can contribute to the blowing.

Preferably, the front edge is provided with a first convex portion protruding toward a suction surface side of the blade. According to the propeller fan thus configured, the front edge is provided with the first convex portion protruding toward the suction surface side of the blade, the first convex portion forms a vortex, which flows on the blade surface along a flow line to prevent separation of the flow on the blade surface. Therefore, the performance and efficiency of the propeller fan can be improved, and noises due to the separation can be reduced, resulting in reduction of the fan noises.

Preferably, a coupling portion between the rear edge and the connection portion is provided with a second convex portion protruding oppositely to the rotational direction of the blade. According to the propeller fan thus configured, the portion provided with the second convex portion increases a chord length so that the blowing can be performed by a larger force.

Preferably, a coupling portion between the rear edge and an outer peripheral portion of the blade is provided with a third convex portion protruding oppositely to the rotational direction of the blade. According to the propeller fan thus configured, the portion provided with the third convex portion increases a chord length so that the blowing can be performed by a larger force.

Preferably, the rear edge is provided with a concave portion hollowed in the rotational direction of the blade. According to the propeller fan thus configured, the provision of the concave portion reduces an area of the blade to reduce efficiently a drag. Since the area of the blade decreases, the air flow rate decreases when the rotation speed is constant, but the drag efficiently decreases so that the power consumption can be reduced when the air flow rate is constant.

Preferably, a length X of a line between opposite ends of the concave portion or a common tangential line with respect to unclear opposite ends of the concave portion is equal to or larger than 0.33 times an outer diameter of the blades. A length Y from the line between the opposite ends of the concave portion or the above tangential line to the deepest position of the concave portion is equal to or smaller than 0.068 times the outer diameter of the blades. According to the propeller fan thus configured, owing to the setting in which the length Y from the line between the opposite ends of the concave portion or the above tangential line to the deepest position of the concave portion is equal to or smaller than 0.068 times the outer diameter of the blades, it is possible to suppress more effectively the rate of decrease in air flow rate when the rotation speed is constant. Also, owing to the setting that the length X of a line between opposite ends of the concave portion or the above tangential line is equal to or larger than 0.33 times the outer diameter of the blades, it is possible to increase more effectively the rate of decrease in power consumption at the constant air flow rate.

Preferably, the plurality of blades and the connection portion have a thin-thickness form, and are formed integrally with each other. According to the propeller fan thus configured, the mass of the propeller fan can be reduced, and rigidity thereof can be improved.

Preferably, the blade-surface-like surface is formed continuously to the blade surface of the blade. According to the propeller fan thus configured, the blade surface of the blade and the blade-surface-like surface of the connection portion are integrated to contribute to the blowing so that the blowing capacity can be significantly improved.

Preferably, a blade surface of a first blade among the plurality of blades and a blade surface of a second blade neighboring to the first blade are formed to continue to each other through the blade-surface-like surface. According to the propeller fan thus configured, the blowing capacity can be further improved significantly.

Preferably, the blade-surface-like surface includes a first portion continuing from a blade surface of a first blade among the plurality of blades, and a second portion continuing from a blade surface of a second blade neighboring to the first blade. The connection portion further has a surface of a not-blade-surface form formed between the first and second portions and arranged coaxially to the rotation center of the blades. According to the propeller fan thus configured, even when the connection portion partially has the surface of the not-blade-surface form, the blade-surface-like surface formed on the connection portion can improve the blowing capacity.

Preferably, the propeller fan is formed by twisting a single plate-like member. According to the propeller fan thus configured, the propeller fan according to the invention can be obtained by effecting twisting work on a metal plate for example.

Preferably, the propeller fan is made of a thin integral member having a curved surface. Since the propeller fan thus configured is made of the thin integral member having the curved surface, the propeller fan according to the invention can be simply formed.

Preferably, the propeller fan is molded from resin. According to the propeller fan thus configured, it is possible to implement the propeller fan having a small weight and a high rigidity.

A fluid feeder according to the invention includes one of the propeller fans described above. According to the fluid feeder thus configured, it is possible to implement the fluid feeder that greatly contributes to the energy-saving properties and the resource-saving design.

A molding die according to the invention is used for molding one of the propeller fans described above. According to the molding die thus configured, it is possible to manufacture the propeller fan having a small weight and a high rigidity.

Preferably, the molding die includes a gate for supplying flowable resin. The blade has a front edge located on a forward side in the rotational direction and a rear edge located on the opposite side. The gate is formed in the connection portion or the coupled region, and is located in a position corresponding to a boundary between the front edge of the first blade among the plurality of blades and the rear edge of the second blade neighboring to the first blade. According to the molding die thus configured, occurrence of a weld line in the connection portion or the coupled region can be suppressed in a boundary position between the front edge of the first blade and the rear edge of the second blade. Thereby, lowering of the breaking rigidity of the propeller fan can be prevented.

Preferably, the molding die includes a gate for supplying flowable resin. The blade has a front edge located on a forward side in the rotational direction. The gate is formed in the connection portion continuing to the base portion of the blade or the coupled region, and is located in a position corresponding to a vicinity of the front edge. According to the molding die thus configured, it is possible to suppress occurrence of a weld line in the front edge portion of the coupled region or the connection portion continuing to the base portion of the blade. Thereby, it is possible to prevent lowering of the breaking rigidity of the propeller fan.

A propeller fan according to still another aspect of the invention includes a plurality of blades circumferentially spaced from each other for performing blowing according to rotation; a connection portion having a blade-surface-like surface for performing the blowing according to the rotation, and connecting base portions of the plurality of neighboring blades; and a rotation shaft arranged coaxially to a rotation center of the blades, protruding from the intake side of the connection portion, and having an end surface parallel to a plane perpendicular to a direction of a rotation axis of the blades. When the propeller fan is viewed in the direction of the rotation axis, a minimum distance from the rotation axis to an outer periphery of the connection portion on a line perpendicularly crossing the rotation axis is longer than a distance from the rotation axis to the outer periphery of the rotation shaft on the above line. The propeller fan further includes a flat surface portion arranged on the outlet side of the connection portion, having an outer form larger than an outer form of the rotation shaft when projected (i.e., image-projected) in a direction of the rotation axis of the blades, and having a flat surface parallel to the end surface.

According to the propeller fan thus configured, the blade-surface-like surface formed on the connection portion contributes to the blowing so that the propeller fan can blow the air in the forward direction even near the rotation center of the blades. This reduces the power required for driving the propeller fan Consequently, it is possible to achieve the propeller fan greatly contributing to the energy-saving properties and the resource-saving design.

Since the propeller fan has the flat surface portion having a larger outer form than the rotation axis and having a flat surface parallel to the end surface, the plurality of propeller fans can be stacked such that the end surface of the rotation shaft is in close contact with the flat surface of the flat surface portion. This allows stable stacking of the plurality of propeller fans in a simple manner for storing or transporting the propeller fans.

Preferably, the propeller fan further includes an annular protrusion protruding from the outlet side of the connection portion, and arranged coaxially to a rotation center of the blades. The annular protrusion has an inner form larger than the outer form of the rotation shaft when projected in the direction of the rotation axis of the blades. According to the propeller fan thus configured, when the upper and lower propeller fans are stacked, the annular protrusion is engaged with the rotation shaft. This engagement restricts the horizontal shifting of the positions so that the plurality of propeller fans can be stacked more stably.

The propeller fan according to further another aspect of the invention includes a plurality of blades circumferentially spaced from each other for performing blowing according to rotation; a connection portion having a blade-surface-like surface for performing the blowing according to the rotation, and connecting base portions of the plurality of neighboring blades; and a rotation shaft arranged coaxially to a rotation center of the blades, and protruding from the intake side of the connection portion. When the propeller fan is viewed in a direction of a rotation axis, a minimum distance from the rotation axis to an outer periphery of the connection portion on a line perpendicularly crossing the rotation axis being longer than a distance from the rotation axis to the outer periphery of the rotation shaft on the line. The propeller fan further includes an annular protrusion arranged on the intake side of the connection portion, arranged radially outside the rotation shaft and protruding to a position higher than the rotation shaft in the direction of the rotation axis of the blades.

According to the propeller fan thus configured, the blade-surface-like surface formed on the connection portion contributes to the blowing so that the propeller fan can blow the air in the forward direction even near the rotation center of the blades. This increases the area of the blade surface contributing to the blowing and reduces the size of the rotation shaft so that the mass of the propeller fan can be small. This reduces the power required for driving the propeller fan. Consequently, it is possible to achieve the propeller fan greatly contributing to the energy-saving properties and the resource-saving design. Further, the plurality of propeller fans can be stacked together through the annular protrusions. This allows stable stacking of the plurality of propeller fans in a simple manner for storing or transporting the propeller fans.

Preferably, a blade surface of a first blade among the plurality of blades continues to a second blade surface of a second blade neighboring to the first blade through the blade-surface-like surface. According to the propeller fan thus configured, the blade surface of the blade and the blade-surface-like surface of the connection portion are integrated to contribute to the blowing, and therefore can significantly improve the blowing capacity.

Preferably, the propeller fan is molded from resin. The propeller fan thus configured can have a small weight and a high rigidity.

A fluid feeder according to another aspect of the invention includes one of the propeller fans described above. Since the fluid feeder fan thus configured has the propeller fan according to the invention, it is possible to achieve the fluid feeder greatly contributing to the energy-saving properties and the resource-saving design.

A molding die according to another aspect of the invention is used for molding one of the propeller fans described above from resin. This molding die thus configured can produce the propeller fan made of resin and having a small weight and a high rigidity.

### EFFECTS OF THE INVENTION

As described above, the invention can provide the propeller fan greatly contributing to the energy-saving properties and the resource-saving design. Also, the invention can provide the propeller fan that greatly contributes to the energy-saving properties and the resource-saving design, and allows stacking for the storing or transporting.

### BRIEF DESCRIPTION OF THE DRAWINGS

Fig. 1 is a side view showing a propeller fan according to a first embodiment of the invention.
Fig. 2 is a plan showing the propeller fan viewed in a direction (from an intake side) of an arrow II in Fig. 1.
Fig. 3 is a plan showing the propeller fan viewed in a direction (from an outlet side) of an arrow III in Fig. 1.
Fig. 4 is a perspective view of the propeller fan in Fig. 1 viewed from the intake side.
Fig. 5 is a plan showing an example of a propeller fan in Fig. 1.
Fig. 6 is a perspective view showing a sectional form of the propeller fan in Fig. 5 taken in a position of 295 mm in diameter.
Fig. 7 is a perspective view showing a sectional form of the propeller fan in Fig. 5 taken in a position of 130 mm in diameter.
Fig. 8 is a perspective view showing a sectional form of the propeller fan in Fig. 5 taken in a position of 95 mm in diameter.
Fig. 9 is a plan showing a propeller fan for comparison.
Fig. 10 is a graph showing a relationship between a rotation speed and an air flow rate of the propeller fan according to the embodiment.
Fig. 11 is a graph showing a relationship between the air flow rate and power consumption of a drive motor according to the embodiment.
Fig. 12 shows pressure-flow rate characteristics of the propeller fan according to the embodiment in Fig. 5 and the propeller fan for the comparison in Fig. 9.
Fig. 13 illustrates a mechanism of the propeller fan according to the embodiment. Fig. 14 is another view for illustrating a mechanism of the propeller fan according to the embodiment.
Fig. 15 is further another view for illustrating the mechanism of the propeller fan according to the embodiment.
Fig. 16 is a plan showing a propeller fan according to a second embodiment of the invention.
Fig. 17 is a perspective view of the propeller fan in Fig. 16 viewed from the intake side.
Fig. 18 is a cross section showing the propeller fan taken along line XVIII - XVIII in Fig. 17.
Fig. 19 is a plan showing a central portion of the propeller fan viewed in a direction of an arrow XIX in Fig. 18.
Fig. 20 is a cross section showing a stacked state of the plurality of propeller fans in Fig. 18.
Fig. 21 is a cross section showing a first modification of the structure for stacking a plurality of propeller fans.
Fig. 22 is a plan showing the propeller fan viewed in a direction of an arrow XXII in Fig. 21.
Fig. 23 is a cross section showing the stacked state of the plurality of propeller fans in Fig. 21.
Fig. 24 is a cross section showing a second modification of the structure for stacking the plurality of propeller fans.
Fig. 25 is a plan showing the propeller fan viewed in a direction of an arrow XXV in Fig. 24.
Fig. 26 is a cross section showing the stacked state of the plurality of propeller fans in Fig. 24.
Fig. 27 is a side view showing a propeller fan according to a fourth embodiment of the invention.
Fig. 28 is a plan showing the propeller fan viewed in a direction (from the intake side) of an arrow XXVIII in Fig. 27.
Fig. 29 is a plan showing the propeller fan viewed in a direction (from the outlet side) of an arrow XXIX in Fig. 27.
Fig. 30 is a perspective view showing the propeller fan in Fig. 27 viewed from the intake side.
Fig. 31 is a side view showing a propeller fan of a fifth embodiment of the invention.
Fig. 32 is a plan showing the propeller fan viewed in a direction of an arrow XXXII in Fig. 31.
Fig. 33 is a plan showing a modification of the propeller fan in Figs. 31 and 32.
Fig. 34 is a plan showing a propeller fan according to a sixth embodiment of the invention.
Fig. 35 is a graph showing a relationship between a rotation speed and an air flow rate of the propeller fan according to the sixth embodiment of the invention.
Fig. 36 is a graph showing a relationship between the air flow rate of the propeller fan and a power consumption of a drive motor according to the sixth embodiment of the invention.
Fig. 37 illustrates, for comparison, the air flow rates exhibited corresponding to the same rotation speed.
Fig. 38 illustrates, for comparison, the power consumptions of the drive motors exhibited corresponding to the same air flow rate.
Fig. 39 is a graph illustrating, for comparison, the power consumption of the drive motor exhibited when X/D changes while Y/D is constant (= 0.068) and the air flow rate is constant.
Fig. 40 is a graph illustrating, for comparison, an air flow rate exhibited when Y/D changes while X/D is constant (= 0.33) and the rotation speed is constant.
Fig. 41 is a plan showing a modification of the propeller fan in Fig. 34.
Fig. 42 is a plan showing a propeller fan according to a seventh embodiment of the invention.
Fig. 43 is a cross section showing molding dies used for producing the propeller fan in Fig. 1.
Fig. 44 is a plan showing an example of positions where gates are located in the molding die for producing a propeller fan with two blades according to the embodiment.
Fig. 45 is a plan showing an example of the positions where the gates are located in the molding die for producing a propeller fan with three blades according to the embodiment.
Fig. 46 shows an example for comparison of a propeller fan having a gate located in a position other than those shown in Fig. 44.
Fig. 47 shows an example for comparison of a propeller fan having gates located in positions other than those shown in Fig. 45.
Fig. 48 is a plan showing another example of the positions where the gates are located in the molding die for producing the two-blade propeller fan according to the embodiment.
Fig. 49 is a plan showing another example of the positions where the gates are located in the molding die for producing the three-blade propeller fan according to the embodiment.
Fig. 50 shows, as an example for comparison, a propeller fan provided with gates in positions other than those shown in Fig. 48.
Fig. 51 shows, as an example for comparison, a propeller fan provided with gates in positions other than those shown in Fig. 49.
Fig. 52 shows an outdoor unit of an air conditioner with the propeller fan in Fig. 1.

### DESCRIPTION OF THE REFERENCE SIGNS

10, 48, 49, 50, 52, 53, 56 and 57 propeller fan, 21, 21A, 21B and 21C blades, 21b front edge, 21c rear edge, 22 concave portion, 26, 36, 36M and 36N blade surface, 31 connection portion, 37 surface, 41 boss hub, 42 end surface, 43 flat surface portion, 44 flat surface, 45 and 46 protrusion, 58, 59 and 60 convex portion, 61 molding die, 66 gate, 75 outdoor unit, 101 center axis

### BEST MODES FOR CARRYING OUT THE INVENTION

Embodiments of the invention will now be described with reference to the drawings. In the following description, the same or corresponding members bear the same reference numbers.

### (First Embodiment)

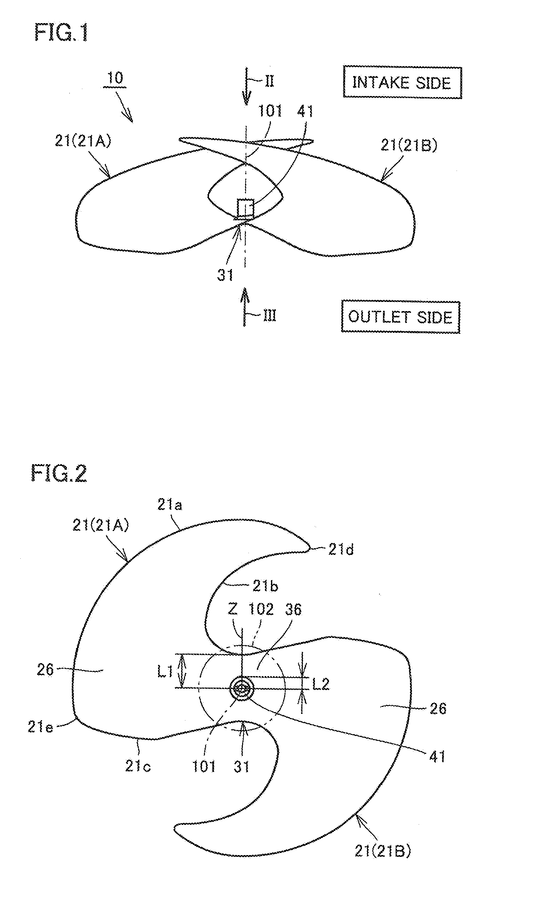

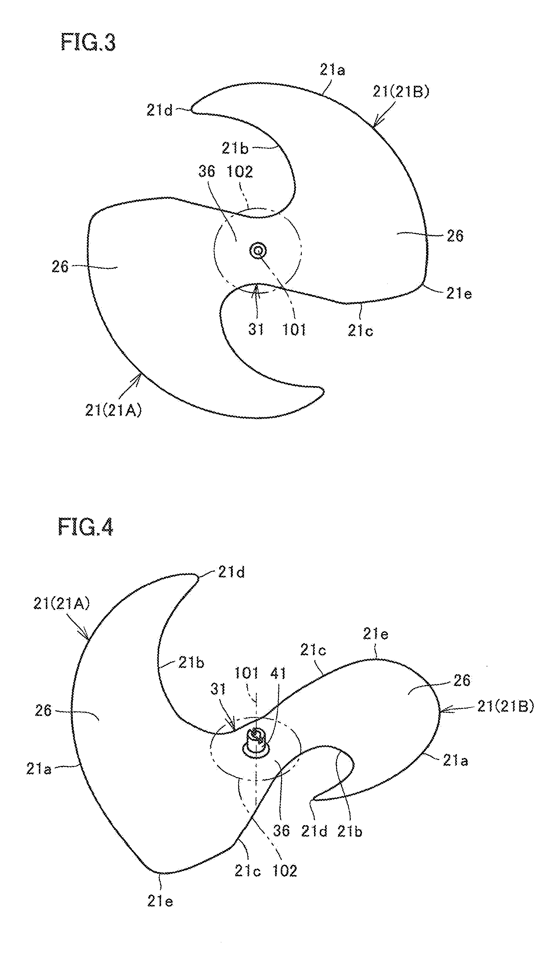

Fig. 1 is a side view showing a propeller fan according to a first embodiment of the invention. Fig. 2 is a plan showing the propeller fan viewed in a direction (from an intake side) of an arrow II in Fig. 1. Fig. 3 is a plan showing the propeller fan viewed in a direction (from an outlet side) of an arrow III in Fig. 1. Fig. 4 is a perspective view of the propeller fan in Fig. 1 viewed from the intake side.

Referring to Figs. 1 to 4, a basic structure of a propeller fan 10 according to the embodiment is described below. Propeller fan 10 has a plurality of blades 21 A and 21B that are circumferentially spaced from each other for performing air blowing according to rotation, and also has a connection portion 31 that has a blade surface 36 as a surface of a blade-surface-like form for performing the blowing, and is located between the plurality of blades 21A and 21B neighboring to each other for connecting base portions of blades 21A and 21B together.

Propeller fan 10 rotates around a center axis 101 that is an imaginary axis, and blows the air from an intake side to an outlet side in Fig. 1. In the figure, when propeller fan 10 is viewed in the direction of center axis 101 and imaginary circle 102 is drawn to separate blades 21A and 21B from each other in the circumferential direction around center axis 101, connection portion 31 is defined inside imaginary circle 102, and blades 21A and 21B are defined outside imaginary circle 102.

The basic structure of propeller fan 10 can be also described or expressed as follows. Propeller fan 10 has a form in which the plurality of blades 21 A and 21B for the blowing are spaced from each other in the rotational direction and are coupled together, and the region of such coupling has a form that perform the blowing according to the rotation.

Then, a structure of propeller fan 10 according to the embodiment will be described below. Propeller fan 10 is prepared by integral molding of synchronous resin such as glass-fiber-filled AS (Acrylonitrile-Styrene) or the like.

Propeller fan 10 is of a two-blade type, and has blades 21A and 21B, which may be collectively referred to as "blades 21" hereinafter.

Blades 21A and 21B are equally spaced from each other in the circumferential direction of the rotation axis of propeller fan 10, i. e., center axis 101. Blades 21A and 21B have the same forms, which can match each other when one of them rotates around center axis 101 toward the other.

Blade 21 has a front edge 21b located on a forward side in the rotational direction of propeller fan 10, a rear edge 21c located on the opposite side in the rotational direction, an outer edge 21 a located on the radially outermost side with respect to center axis 101, a leading blade edge 2 1 d smoothly connecting front edge 21b and outer edge 21a together, and a trailing blade edge 21e smoothly connecting rear edge 21 c and outer edge 21 a together. Leading blade edge 21d has a crescent- or scythe-like sharp form.

Blade 21 has a blade surface 26 that performs the blowing according to the rotation of propeller fan 10 (i.e., blowing the air from the intake side to the outlet side).

Blade surface 26 is formed on each of the sides facing to the inlet side and the outlet side, respectively. Blade surface 26 is formed in a region surrounded by front edge 21 b, leading blade edge 21d, outer edge 21a, trailing blade edge 21 e and rear edge 21c. Blade surface 26 is formed throughout the area of the region surrounded by front edge 21 b, leading blade edge 21d, outer edge 21a, trailing blade edge 21e and rear edge 21 c. Each of blade surfaces 26 of blades 21 A and 21 B is formed of a curved surface that inclines to move from the intake side toward the outlet side as the position moves in the circumferential direction from front edge 21b toward rear edge 21c.

Blades 21A and 21B are coupled together by connection portion 31 arranged round center axis 101.

Connection portion 31 has blade surfaces 36 on the sides facing to the intake side and the outlet side, respectively, and has a blade-like form. Blade surface 36 is formed continuously to each of blade surfaces 26 of blades 21A and 21B. Blade surfaces 26 of blades 21A and 21B is formed continuously to each other through blade surface 36. In this embodiment, front edge 21b of blade 21A is opposed to rear edge 21c of blade 21B in the direction of a line passing through blades 21A and 21B, and front edge 21b of blade 21B and rear edge 21c of blade 21A are opposed to each other in the same direction. Therefore, the direction of inclination of the blade surface of blade 21A and the direction of inclination of the blade surface of blade 21B exhibit such a positional relationship that these directions are twisted with respect to each other with center axis 101 located therebetween. The inclination of the blade surface decreases as the position moves from blade surface 26 of each of blades 21A and 21B to blade surface 36 of connection portion 31, and blade surface 36 of blade 21A is smoothly connected to blade surface 36 of blade 21B on a line passing through center axis 101. Thus, blades 21A and 21B as well as connection portion 31 form blade surfaces 26 and blade surface 36, respectively, which extend continuously to each other in a tangential fashion.

In propeller fan 10 according to the embodiment, the region coupling blades 21 A and 21B together has a form that performs the blowing according to the rotation. The region coupling blades 21A and 21B together has a blade-surface-like form for blowing the air according to the rotation.

The base portions of front and rear edges 21b and 21c of respective blades 21A and 21B are connected together, and the base portions of front and rear edges 21b and 21c of respective blades 21B and 21A are connected together. Connection portion 31 has such a form that the position changes from the intake side toward the outlet side as the position moves from the base portion of front edge 21b of blade 21A toward the base portion of rear edge 21c of blade 21B, and such that the position moves from the intake side toward the outlet side as the position moves from the base portion of front edge 21b of blade 21B toward the base portion of rear edge 21c of blade 21A.

Connection portion 31 has such a form that the position changes from the portion continuing to blade surface 26 of blade 21 extends from the intake side, in the blowing direction, to the outlet side as the position moves from the base portion of front edge 21b of blade 21A toward the base portion of rear edge 21c of blade 21B, and the portion continuing to blade surface 26 of blade 21 extends from the intake side, in the blowing direction, toward the outlet side as the position moves from the base portion of front edge 21b of blade 21B toward the base portion of rear edge 21c of blade 21A. Connection portion 31 is configured to have a function of supplying the air flow from the intake side, in the blowing direction, of propeller fan 10 toward the outlet side.

Blades 21A and 21B as well as connection portion 31 have thin forms, respectively, and are integral with each other. Thus, propeller fan 10 according to the embodiment has the two blades, each of which has an integral form as a whole and extends radially outward from the center of center axis 101, and blades 21A and 2 1 B are integrally formed with connection portion 31 1 therebetween. Propeller fan 10 has an integral form including blades 2 1 A and 21B as well as the region coupling blades 2 1 A and 21B together.

Propeller fan 10 has a boss hub 41 as a rotation shaft. Boss hub 41 connects propeller fan 10 to a drive source, i.e., an output shaft of an electric motor (not shown). Boss hub 41 has a circular cylindrical form, and is connected at a position overlapping center axis 101 to connection portion 31. Boss hub 41 extends in a direction of center axis 101 from blade surface 36 on the intake side. In propeller fan 10 according to the embodiment, boss hub 41 that is a member for rotationally driving blades 2 1 A and 21B is formed integrally with them and is located coaxially to the region coupling blades 21A and 21B together.

The form of boss hub 41 is not restricted to the cylindrical form, and can be appropriately changed according to the structure connected to the output shaft of the motor. Boss hub 41 may extend from blade surface 36 on the outlet side, and also may extend from blade surfaces 36 on the intake and outlet sides.

Connection portion 31 has a form extending radially outward from an outer peripheral surface of boss hub 41. In other words, when viewed in the direction of center axis 101 of propeller fan 10, connection portion 31 is formed such that a minimum distance L1 from center axis 101 to the outer edge of connection portion 31 on an imaginary line Z perpendicularly crossing center axis 101 is larger than a distance L2 from center axis 101 to the outer edge of boss hub 41 on imaginary line Z (see Fig. 2).

In an example of the preferable form of propeller fan 10, a section of propeller fan 10 taken along imaginary plane that contains center axis 101 and imaginary line Z in Fig. 2 has a substantially elliptical form, and a ratio of b/a is equal to 0.078 where "a" and "b" indicates a length in a circumferential direction (long axis) and a length in the axial direction (short axis), respectively.

When the resin molding is performed so that the ratio b/a between a and b falls within a range from 0.03 to 0.15, it is possible to provide the propeller fan that does not impair the molding property and the blowing performance, and does not have a problem in strength.

When the ratio b/a is smaller than 0.03, connection portion 31 has an excessively small resin thickness, resulting in a problem in strength. Further preferably, the ratio b/a is set to or above 0.046.

When the ratio b/a is larger than 0.150, connection portion 31 has an excessively large thickness so that a problem such as molding sink occurs in molding property, and the propeller fan has an excessively large mass, which impairs the blowing performance. Further preferably, the ratio b/a is set to or below 0.089.

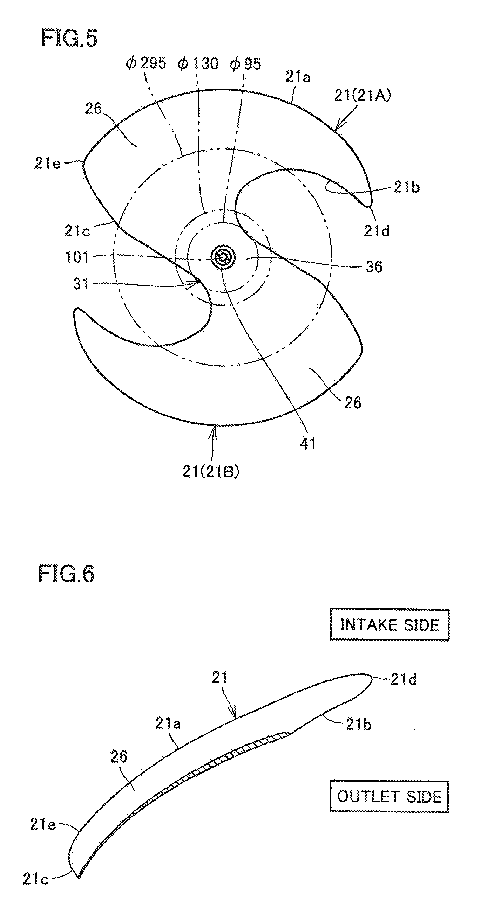

Fig. 5 is a plan showing an example of the propeller fan in Fig. 1. Referring to Fig. 5, propeller fan 10 has an outer diameter of 460 mm when viewed in the direction of center axis 101.

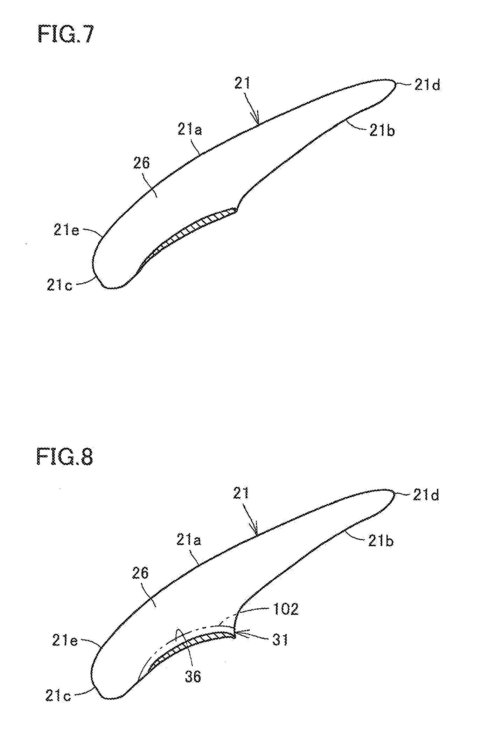

Fig. 6 is a perspective view showing a sectional form of the propeller fan in Fig. 5 taken in a position of 295 mm in diameter. Fig. 7 is a perspective view showing a sectional form of the propeller fan in Fig. 5 taken in a position of 130 mm in diameter. Fig. 8 is a perspective view showing a sectional form of the propeller fan in Fig. 5 taken in a position of 95 mm in diameter. Fig. 6 shows a section of blade 21, Fig. 7 shows a section of a boundary portion between blade 21 and connection portion 31, and Fig. 8 shows a section of connection portion 31.

Referring to Figs. 6 and 7, blade 21 has the blade-like form, and the section thereof in the circumferential direction extending between front and rear edges 21b and 21c has the thickness that decreases as the position moves from a position near the center of the blade toward front edge 21b or rear edge 21c, and particularly has the largest thickness in the position shifted from the center of the blade toward front edge 21b. Referring to Fig. 8, connection portion 31 has substantially the same blade-like form as blade 21 described above. Thus, propeller fan 10 according to the embodiment has the section of the blade-like form in any section position between outer edge 2 1 a and center axis 101.

The description has been given on propeller fan 10 that is integrally formed of the synthetic resin, but the material of the propeller fan according to the invention is not restricted to the resin. For example, propeller fan 10 may be formed by effecting twist working on a single metal plate, or may be formed of an integral thin member having a curved surface. In these cases, boss hub 41 that is independently formed may be joined to the rotation center of propeller fan 10.

Description will now be given on operations and effects implemented or offered by propeller fan 10 according to the embodiment.

Propeller fan 10 according to the embodiment is provided with connection portion 31 of a blade-like form connecting blades 21A and 21B together. Owing to this structure, even the rotation center portion that could not be practically and sufficiently used as the boss hub in the conventional structure can be effectively used as the blade having a blade-like sectional form and a large attack angle. This significantly enhances the blowing performance near the center where the peripheral speed is lower than that in the outer peripheral portion, and the blowing performance of the whole fan can be significantly improved.

By increasing the area of the blade for the blowing, it is possible to increase the air flow rate at the constant rotation speed. Further, a major portion of the large boss hub that is present in and near the rotation center in the conventional structure is replaced with connection portion 31 having the section of the blade-like form so that the mass of the propeller fan can be reduced. This reduces the load on the drive motor, and can reduce the electric power consumption at the constant air flow rate.

Further, the effects derived from the above operations and effects can be as follows:
(1) Since the air flow rate at the constant rotation speed can be reduced, the noise can be reduced. (In recent years, there is a tendency, e.g., in the air conditioner, that the air flow rate is increased for improving the energy-saving properties. This results in a problem that the noises increase to impair the degree of comfort in housing conditions. Conversely, propeller fan 10 according to the embodiment can increase the air flow rate without increasing the noise.)
(2) Since the pressure-flow rate characteristics can be improved, the fan performance can be improved. (In recent years, there is a tendency, e.g., in the air conditioner, that the pressure loss increases as the performance of a heat exchanger is increased for improving the energy-saving properties. Since the air flow rate lowers as the pressure loss of the heat exchanger increases (i.e., the trade-off relationship), there is a problem that the effect by the increase in performance of the heat exchanger cannot be sufficiently achieved. Conversely, propeller fan 10 according to the embodiment can improve the pressure-flow rate characteristics, and therefore can suppress the lowering of the air flow rate in the heat exchanger causing a large pressure loss. Consequently, it is possible to achieve sufficiently the effect of increasing the performance of the heat exchanger.)
(3) The fan efficiency can be improved and the power consumption can be reduced. (In recent years, there is a tendency, e.g., in the air conditioner, that the air flow rate is increased for improving the energy-saving properties. This results in a problem that the power consumption of the motor increases. Conversely, propeller fan 10 according to the embodiment can suppress the increase in power consumption of the motor even when the air flow rate is increased. When the air flow rate is not increased, the power consumption of the motor can be reduced owing to the improvement of the efficiency.)
(4) Reduction in weight can reduce a material, and can further reduce the power consumption of the motor. (When the fan has a large weight, bearing loss of a motor shaft and the like increase, and additional power consumption is required. Conversely, propeller fan 10 according to the embodiment can significantly reduce the weight of the fan, and thereby the bearing loss of the motor shaft and the like can be reduced so that the power consumption of the motor can be reduced.)

For the reasons described above, propeller fan 10 according to the embodiment can implement the propeller fan that greatly contributes to the energy-saving properties and the resource-saving design in connection with the global environment conservation.

Then, description will be given on the practical examples that were implemented for confirming the foregoing operations and effects offered by propeller fan 10 according to the embodiment.

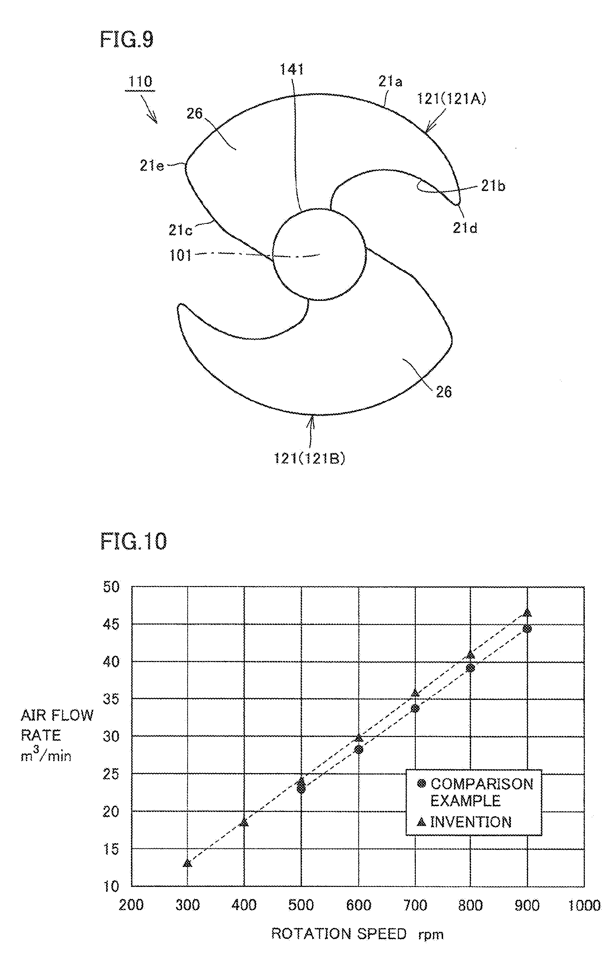

Fig. 9 is a plan showing a propeller fan for comparison. Referring to Fig. 9, a propeller fan 110 for comparison is provided at its rotation center with a boss hub 141 having an outer diameter of 130 mm, and is also provided with blades 121 (121A and 121B) extending radially outward from boss hub 141. The shape and size of blade 121 is substantially the same as those of blade 21 in Fig. 5.

Fig. 10 is a graph showing a relationship between the rotation speed and the air flow rate of the propeller fan according to the embodiment. Referring to Fig. 10, the air flow rates were measured at various rotation speeds, using propeller fan 10 according to the embodiment in Fig. 5 and propeller fan 110 for the comparison in Fig. 9. As can be seen from the graph of Fig. 10, the air flow rate of propeller fan 10 according to the embodiment was larger than that of propeller fan 110 for the comparison in every rotation speed range. For example, when the rotation speed was 900 rpm, propeller fan 110 for the comparison exhibited the air flow rate of 44.49 m³/min, and propeller fan 10 according to the embodiment exhibited the air flow rate of 46.79 m³/min (equal to 105.2% of that of the comparison example).

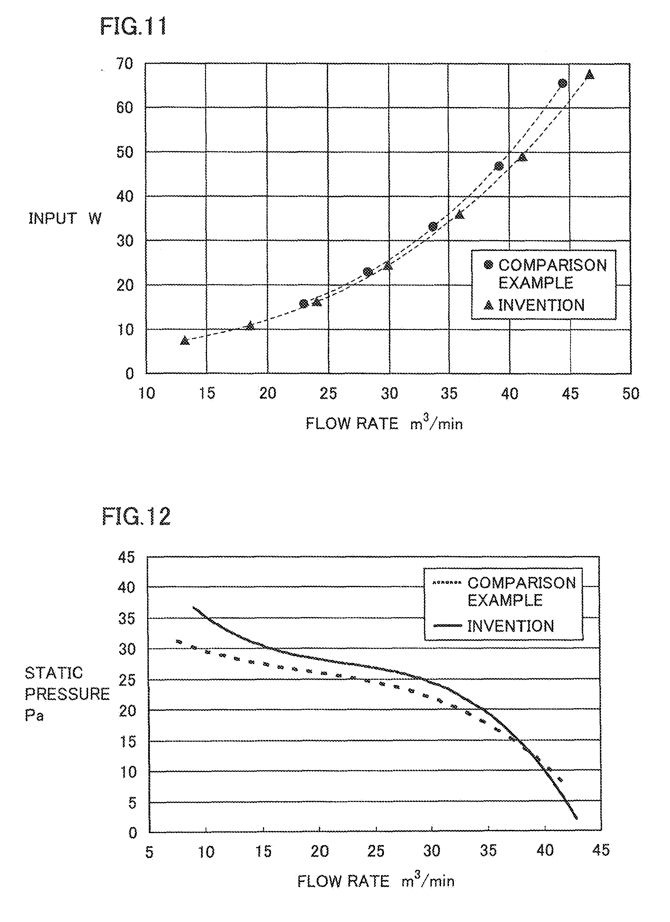

Fig. 11 is a graph showing a relationship between the air flow rate of the propeller fan and the power consumption of the drive motor (i.e., motor for driving) according to the embodiment. Referring to Fig. 11, propeller fan 10 according to the embodiment shown in Fig. 5 and propeller fan 110 for comparison in Fig. 9 were used, and the power consumption of each drive motor was measured at various air flow rates. As can be seen from the graph in the figure, the power consumption of propeller fan 10 according to the embodiment was smaller than that of propeller fan 110 for the comparison in every air flow range. For example, when the air flow rate was 40 m³/min, the power consumption of propeller fan 110 for the comparison was 49.8 W, and propeller fan 10 according to the embodiment was 46.2 W (equal to 107.8% of that of the comparison example).

It can be confirmed from the practical example described above that propeller fan 10 according to the embodiment can increase the air flow rate at the constant rotation speed, and can reduce the power consumption of the drive motor at the constant air flow rate.

Then, the description will be given on a mechanism of improving the performance of propeller fan 10 according to the embodiment.

Fig. 12 shows the pressure-flow rate characteristics of the propeller fan according to the embodiment in Fig. 5 and the propeller fan for the comparison in Fig. 9. Referring to Fig. 12, the comparison was made between propeller fan 10 of 460 mm in outer diameter according to the embodiment and propeller fan 110 of 460 mm in outer diameter for the comparison, and particularly was made in connection with the pressure-flow rate characteristics (P: static pressure - Q: flow rate) at the rotation speed of 700 rpm.

As can be seen from the graph in the figure, propeller fan 10 according to the embodiment improved the P-Q characteristics at the constant rotation speed, as compared with propeller fan 110 for the comparison. Also, the power consumption of the drive motor at the constant air flow rate was reduced, and the motor efficiency was significantly improved.

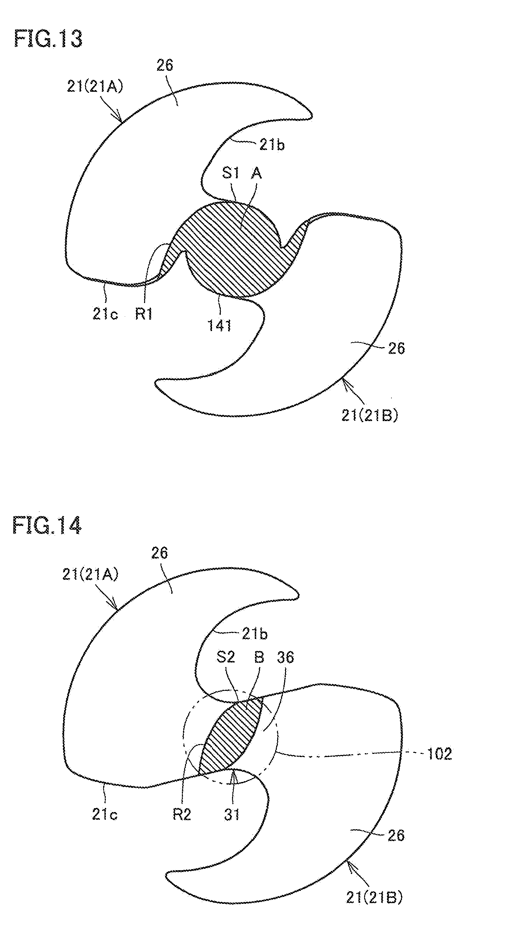

Figs. 13 to 15 illustrate the mechanism of the propeller fan according to the embodiment. Referring to Figs. 13 to 15, the mechanism of the propeller fan according to the embodiment will be specifically described below.

When blades 21 of the fan are driven to rotate, the wind passes over blade surfaces 26. In this operation, the wind first meets front edge 21b of blade 21, then flows along blade surface 26 and flows out beyond rear edge 21c of blade 21.

A phenomenon occurring near a center of the action of blades 21 will now be discussed. On the propeller fan for the comparison (see Fig. 13), the wind flows onto blade surface 26 through front edge 21b (S1 in Fig. 13) at the position where the base portion of blade 21 is in contact with boss hub 141. Thereafter, it turns and is affected by the centrifugal force so that a flow line expands slightly outward as indicated by R1 in Fig. 13 beyond a concentric circle. A hatched portion (area A) inside line R1 cannot perform the work of the blower producing the wind.

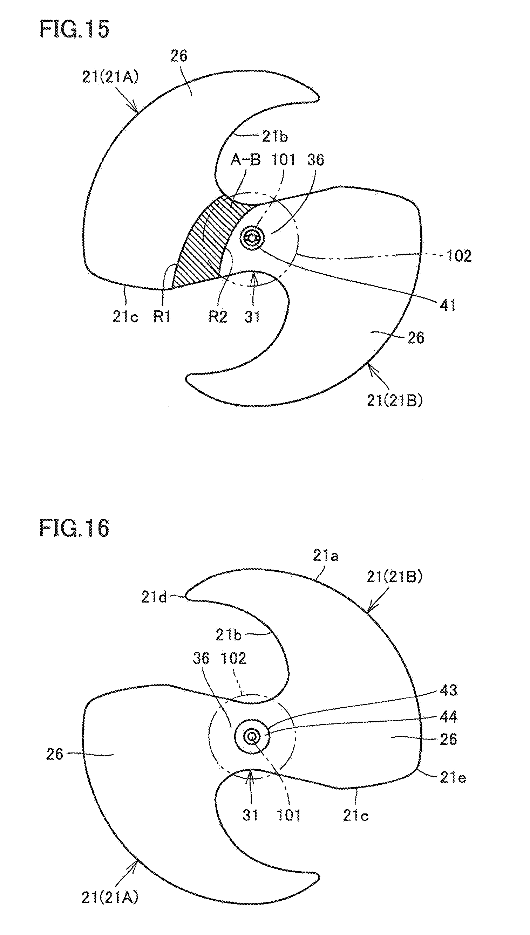

Conversely, according to the propeller fan of the embodiment, boss hub 41 is extremely small, and even a portion thereof near the center operates as the blade, in contrast to the propeller fan for the comparison. Therefore, the wind flows onto blade surface 36 through front edge 21b (S2 in Fig. 14) of connection portion 31 forming a boundary with respect to the base portion of blade 21. Thereafter, the flow line slightly expands beyond the concentric circle as indicated by R2 in Fig. 14. Similarly to the propeller fan for the comparison, the hatched portion (area B) inside the line R2 cannot perform the work of the blower producing the wind. Fig. 15 shows an area difference (A - B) between the regions of them where the fans cannot perform the work of the blower producing the wind.

It is well known in aerodynamics that a lift is proportional to an area. The propeller fan according to the embodiment can increase the lift by an amount corresponding to the above area difference (A - B). It is known that the wind is produced by a reaction force caused by the reaction of the lift, and the larger lift causes the larger reaction force, and increases the blowing performance.

### (Second Embodiment)

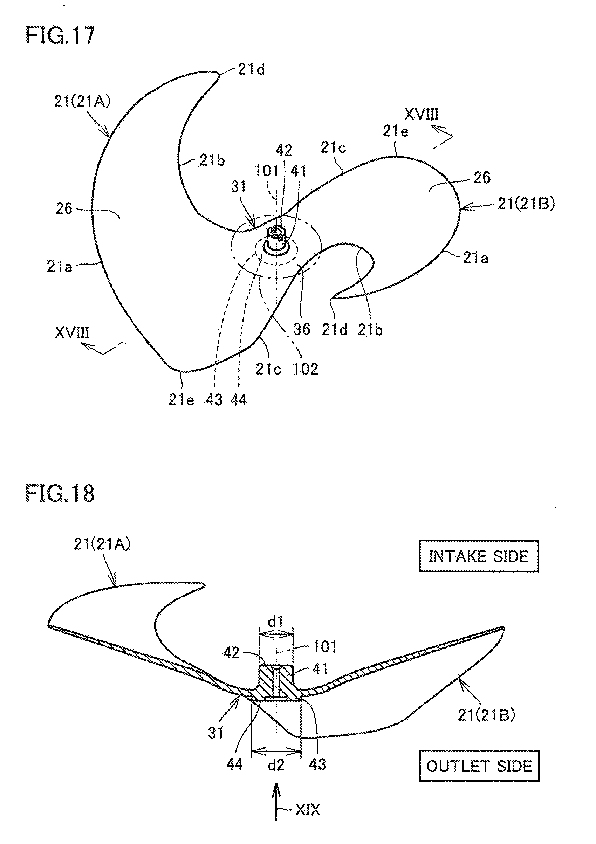

Fig. 16 is a plan showing the propeller fan according to a second embodiment of the invention. Fig. 16 corresponds to Fig. 3 relating to the first embodiment. Fig. 17 is a perspective view of the propeller fan in Fig. 16 viewed from the intake side. Fig. 18 is a cross section showing the propeller fan taken along line XVIII - XVIII in Fig. 17.

Referring to Figs. 1, 2, 16, 17 and 18, description will be given on a basic structure of propeller fan 10 according to the embodiment. Propeller fan 10 has the plurality of blades 21A and 21B that are circumferentially spaced from each other for performing the blowing according to the rotation, and connection portion 31 that has blade surface 36 as a blade-surface-like surface for performing the blowing according to the rotation and connects the base portions of blades 21A and 21B neighboring to each other. In other words, propeller fan 10 is formed by coupling the plurality of blades 21A and 21B, which perform the blowing, to each other and providing the coupled region that assumes the form for performing the blowing according to the rotation.

Propeller fan 10 further has boss hub 41 serving as the rotation shaft that is arranged coaxially to the rotation center of blades 21A and 21B, protrudes from the intake side of connection portion 31 and has an end surface 42 parallel to the plane perpendicular to the rotation axis of blades 21A and 21B. When propeller fan 10 is viewed in the direction of its rotation axis, minimum distance L1 from the rotation axis to the outer edge of connection portion 31 on imaginary line Z perpendicularly crossing the center axis is larger than distance L2 from the center axis to the outer edge of boss hub 41 on imaginary line Z. Propeller fan 10 further has a flat surface portion 43 parallel to end surface 42. When boss hub 41 is projected (i.e., image-projected) in the direction of the rotation axis of blades 21A and 21B, an outer form of flat surface portion 43 is larger than that of boss hub 41.

Propeller fan 10 rotates around center axis 101 that is an imaginary axis, and thereby performs the blowing from the intake side in Fig. 1 to the outlet side. In the figure, when propeller fan 10 is viewed in the direction of center axis 101 and imaginary circle 102 is drawn to separate blades 2 1 A and 21B from each other in the circumferential direction around center axis 101, connection portion 31 is defined inside imaginary circle 102, and blades 21A and 21B are defined outside imaginary circle 102.

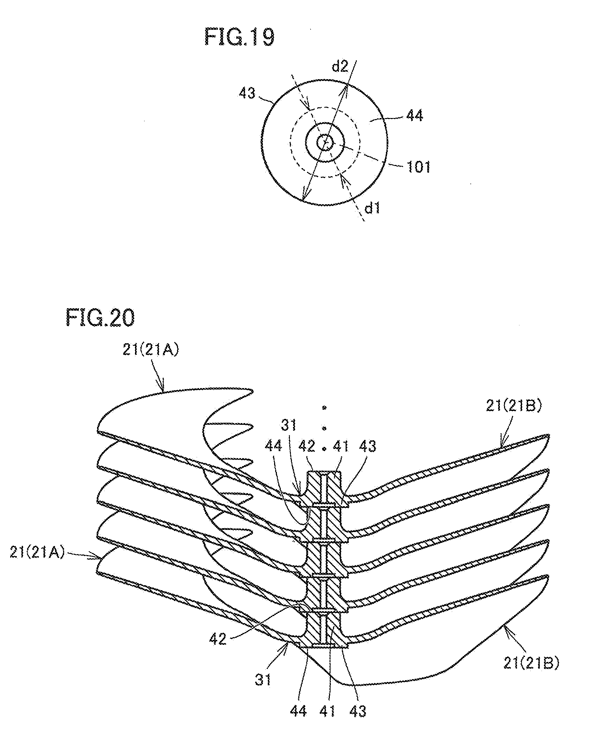

Then, description will be given on the structure employed for stacking the plurality of propeller fans 10 for storing or transporting. Fig. 19 is a plan showing a central portion of the propeller fan viewed in a direction of an arrow XIX in Fig. 18.

Referring to Figs. 18 and 19, boss hub 41 has end surface 42 on a portion extending in the direction of center axis 101 from connection portion 31 on the intake side. End surface 42 extends parallel to the plane perpendicular to the direction of center axis 101. In this embodiment, when the intake side of propeller fan 10 is viewed in the direction of center axis 101, end surface 42 has a circular outer shape, and has an outer diameter d 1 with respect to center axis 101.

Propeller fan 10 has flat surface portion 43 providing flat surface 44. Flat surface portion 43 is located on the side remote from the intake side where boss hub 41 is arranged, i.e., on connection portion 31 on the outlet side. Flat surface 44 is formed as the end surface of flat surface portion 43, and extends parallel to end surface 42 of boss hub 41. Flat surface 44 is formed in a position protruding from blade surface 36 of connection portion 31 in the direction of center axis 101. In this embodiment, when the outlet side of propeller fan 10 is viewed in the direction of center axis 101, flat surface 44 has a circular outer form, and has an outer diameter d2 larger than outer diameter d1 with respect to the center defined by center axis 101. Flat surface 44 is formed coaxially to end surface 42.

The embodiment has been described in connection with the case where end surface 42 and flat surface 44 have the circular outer forms, respectively. This is not restrictive, and these may have polygonal forms or elliptic forms, respectively.

Fig. 20 is a cross section showing a stacked state of the plurality of propeller fans in Fig. 18. Referring to Fig. 20, the plurality of propeller fans 10 are stacked in the height direction thereof (i.e., in the direction of center axis 101). In this case, the plurality of propeller fans 10 are stacked such that the inlet side and therefore the outlet side of each propeller fan 10 are directed in the vertically same directions as those of the others, respectively. The plurality of propeller fans are stacked such that flat surface 44 of upper propeller fan 10 is placed on end surface 42 of lower propeller fan 10.

Propeller fan 10 according to the second embodiment of the invention thus configured can achieve substantially the same effect as the first embodiment.

Additionally, propeller fan 10 according to the embodiment has boss hub 41 pf reduced sizes owing to provision of the blade-like connection portion 31. Since flat surface portion 43 is configured such that flat surface 44 has a larger outer form than end surface 42 formed on boss hub 41 of the reduced sizes, the plurality of propeller fans 10 can be stacked stably.

When the propeller fan (i.e., propeller fan 110 for comparison in Fig. 9) has the large boss hub from which the plurality of blades extends radially outward, the vertically neighboring boss hubs of the propeller fans can be combined so that the plurality of propeller fans can be stacked relatively easily. However, when the portion provided with the boss hub of the propeller fan is replaced with blade-like connection portion 31 for improving the blowing capacity of the fan, blade surface 36 of connection portion 31 formed at the rotation center causes another problem that propeller fans 10 cannot be stacked without difficulty.

Conversely, according to the embodiment, flat surface portion 43 is located on the outlet side opposite to the intake side on which boss hub 41 is located. Thereby, propeller fans 10 can be stacked through boss hub 41 and flat surface portion 43. Consequently, the plurality of propeller fans 10 can be stably stacked together by a simple manner for storing or transporting.

### (Third Embodiment)

This embodiment will be described below in connection with a modification of the structure for stacking the plurality of propeller fans for storing or transporting as described in the second embodiment.

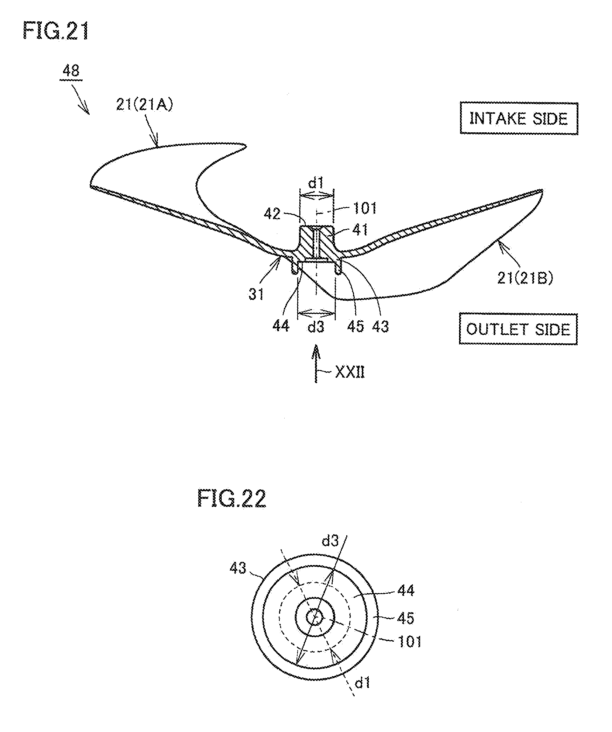

Fig. 21 is a cross section showing a first modification of the structure for stacking the plurality of propeller fans. Fig. 22 is a plan showing the propeller fan viewed in a direction of an arrow XXII in Fig. 21.

Referring to Figs. 21 and 22, a propeller fan 48 in this modification includes a protrusion 45 in addition to the structures in Fig. 18. Protrusion 45 is arranged on the same side as flat surface portion 43, i.e., on connection portion 31 on the outlet side. Protrusion 45 has an annular form coaxial to center axis 101, and protrudes in the direction of center axis 101 from flat surface 44. In this embodiment, when the outlet side of propeller fan 48 is viewed in the direction of center axis 101, protrusion 45 has the annular form having a circular section, and an inner diameter d3 thereof with respect to a center defined by center axis 101 is larger than outer diameter d1 of boss hub 41.

The annular section of protrusion 45 may be appropriately modified according to the form of boss hub 41.

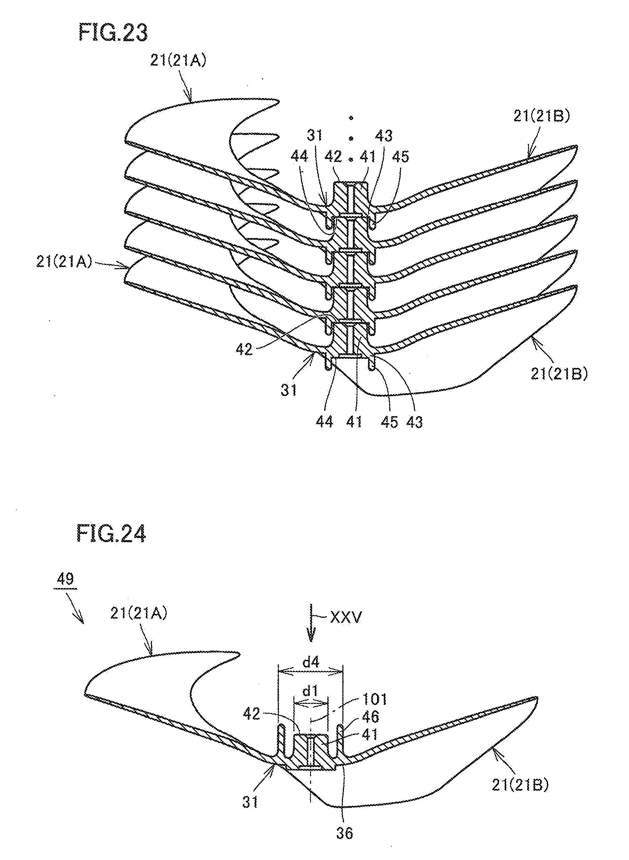

Fig. 23 is a cross section showing the stacked state of the plurality of propeller fans in Fig. 21. According to the modification, as shown in Fig. 23, annular protrusion 45 of upper propeller fan 48 is fitted around boss hub 41 of lower propeller fan 48 when the plurality of propeller fans 48 are stacked such that flat surface 44 of upper propeller fan 48 is placed on end surface 42 of lower propeller fan 48, as is done in the form shown in Fig. 20.

According to the structure, the fitting of boss hub 41 into annular protrusion 45 can prevent horizontal shifting of the positions of propeller fans 48 so that propeller fans 48 can be stacked more stably.

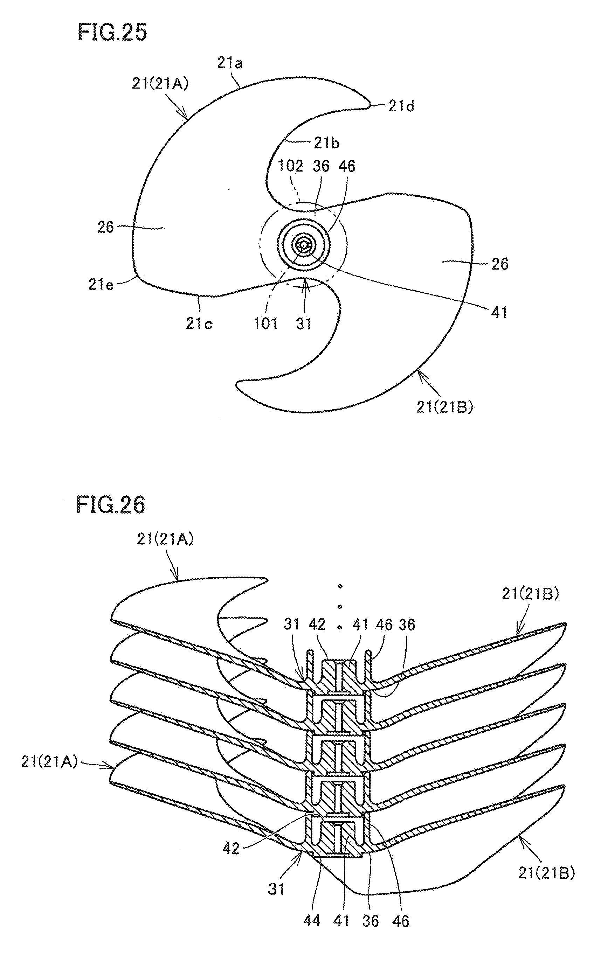

Fig. 24 is a cross section showing a second modification of the structure for stacking the plurality of propeller fans, and corresponds to Fig. 18 showing the first embodiment. Fig. 25 is a plan showing the propeller fan viewed in a direction of an arrow XXV in Fig. 24.

Referring to Figs. 24 and 25, a propeller fan 49 according to this modification has a protrusion 46. Protrusion 46 protrudes from the same side as boss hub 41, i.e., from connection portion 31 on the intake side. Protrusion 46 has the annular form and is located on the outer periphery of boss hub 41. When the intake side of propeller fan 49 is viewed in the direction of center axis 101, protrusion 46 is coaxial to center axis 101 and has an annular form having an outer diameter d4 larger than outer diameter d 1 of boss hub 41. Protrusion 46 protrudes in the direction of center axis 101 to a position higher than boss hub 41.

Fig. 26 is a cross section showing the stacked state of the plurality of propeller fans shown in Fig. 24. Referring to Fig. 26, the plurality of propeller fans 49 are stacked in the height direction thereof (i.e., in the direction of center axis 101). The plurality of propeller fans 49 are stacked such that the inlet side and therefore the outlet side of each propeller fan 49 are directed in the vertically same directions as those of the others, respectively. The plurality of propeller fans 49 are stacked such that blade surface 36 on the outlet side of upper propeller fan 49 is placed on annular protrusion 46 of lower propeller fan 49.

According to this structure, the plurality of propeller fans 49 can be stably stacked through annular protrusions 46. Also, a balance piece can be attached to annular protrusion 46 to eliminate an imbalance of propeller fan 49.

Propeller fans 48 and 49 according to the third embodiment of the invention having the above structure can achieve substantially the same effect as that of the second embodiment.

### (Fourth Embodiment)

A propeller fan according to a fourth embodiment of the invention basically and substantially has the same structure as propeller fan 10 according to the first embodiment. Description of the same structures is not repeated.

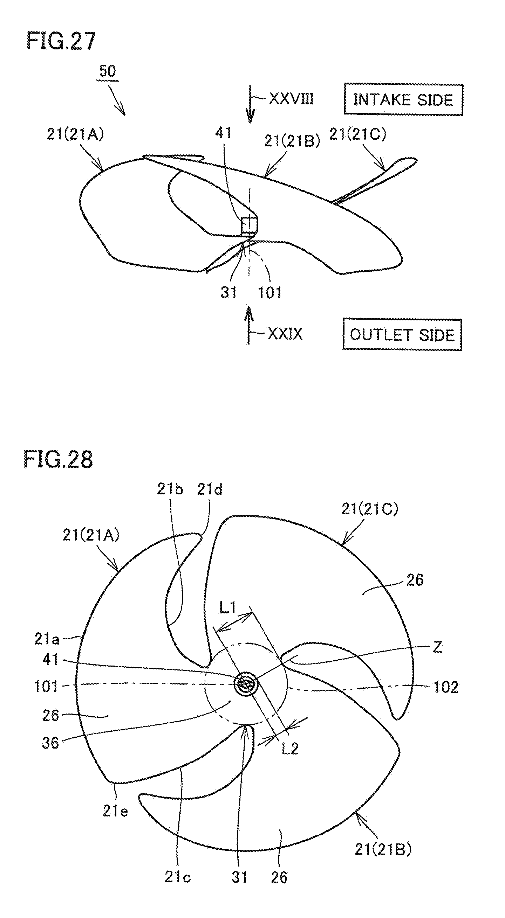

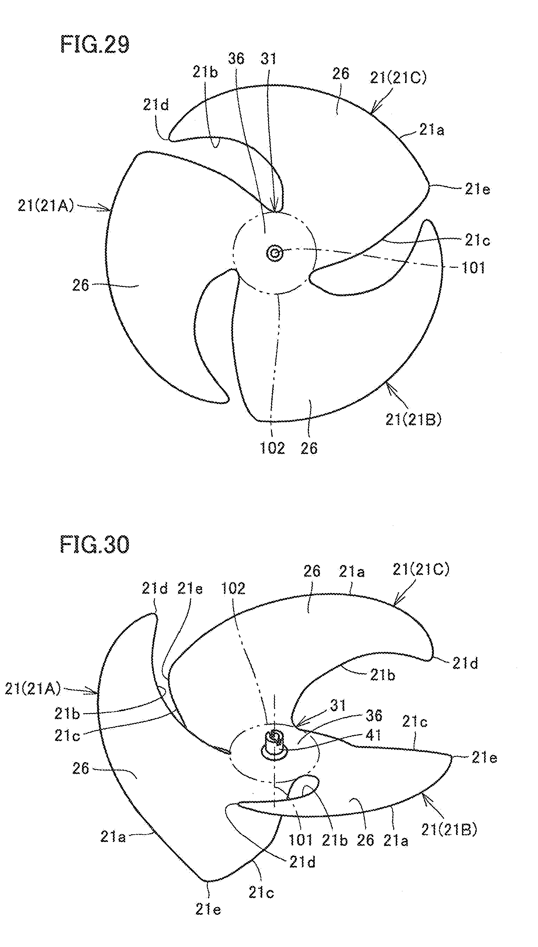

Fig. 27 is a side view showing the propeller fan according to the fourth embodiment of the invention. Fig. 28 is a plan showing the propeller fan viewed in a direction (from the intake side) of an arrow XXVIII in Fig. 27. Fig. 29 is a plan showing the propeller fan viewed in a direction (from the outlet side) of an arrow XXIX in Fig. 27. Fig. 30 is a perspective view showing the propeller fan in Fig. 27 viewed from the intake side.

Referring to Figs. 27 to 30, description will be given on the basic structure of a propeller fan 50 according to the embodiment. Propeller fan 50 has the plurality of blades 21 (21 A, 21 Band 21 C) that are circumferentially spaced from each other for performing the blowing according to the rotation, and also has connection portion 31 that has blade surface 36 serving as the blade-surface-like surface for performing the blowing according to the rotation, and connects the base portions of blades 21 A, 21B and 21C of the plurality of neighboring blades 21 together.

Propeller fan 50 rotates around center axis 101 that is an imaginary axis, and thereby performs the blowing from the intake side to the outlet side in Fig. 16. In the figure, when propeller fan 50 is viewed in the direction of center axis 101 and such imaginary circle 102 is drawn that separates blades 21 A, 21 Band 21C from each other in the circumferential direction around center axis 101, connection portion 31 is defined inside imaginary circle 102 and blades 21A, 2 1 B and 21C are defined outside imaginary circle 102. When a propeller fan has four or more blades 21, imaginary circle 102 is drawn similarly to propeller fan 50.

Propeller fan 50 is a three-blade fan having blades 21A, 21B and 21C. Blades 21A, 21B and 21C are equally spaced from each other in the circumferential direction around center axis 101. Blades 21A, 21B and 21C have the same forms.

Blades 21A, 21B and 21C are connected together by connection portion 31 arranged around center axis 101. In propeller fan 50 according to the embodiment, the three blades that are formed of a single member and extend radially outward from center axis 101 are integrally formed of blades 21A, 21B and 21C as well as connection portion 31.

Propeller fan 50 has boss hub 41 as the center shaft. Connection portion 31 extends radially outward from the outer peripheral surface of boss hub 41. In other words, when propeller fan 50 is viewed in the direction of center axis 101, connection portion 31 is formed such that minimum length L1 of connection portion 31 measured from center axis 101 along imaginary line Z passing through center axis 101 is longer than length L2 of boss hub 41 measured from center axis 101 along imaginary line Z (see Fig. 28).

Propeller fan 50 according to the fourth embodiment of the invention having the above structure can achieve substantially the same effect as the first embodiment.

The propeller fan according to the invention may have four or more blades.

### (Fifth Embodiment)

A propeller fan according to a fifth embodiment of the invention basically and substantially has the same structure as propeller fan 10 according to the first embodiment. Description of the same structures is not repeated.

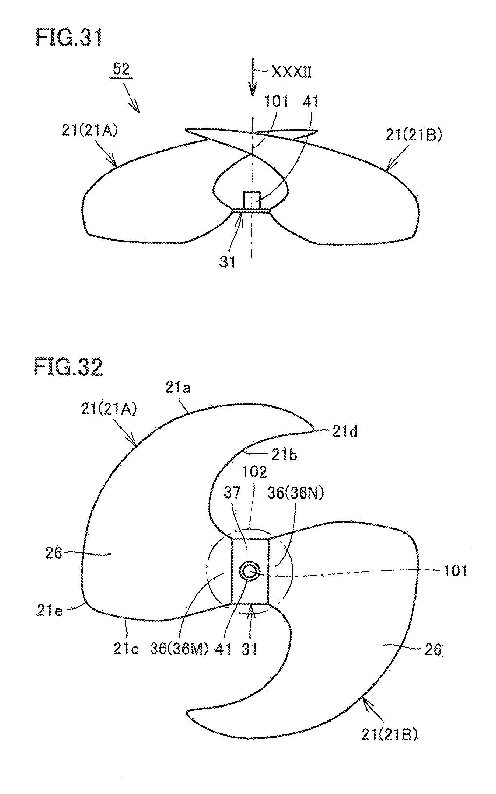

Fig. 31 is a side view showing the propeller fan of the fifth embodiment of the invention. Fig. 32 is a plan showing the propeller fan viewed in a direction of an arrow XXXII in Fig. 31.

Referring to Figs. 31 and 32, blade surface 36 of connection portion 31 1 in a propeller fan 52 according to the embodiment is formed of a blade surface 36M that is a first portion continuously extending from blade surface 26 of blade 21A and a blade surface 36N that is a second portion continuously extending from blade surface 26 of blade 21B.

Connection portion 31 further has a flat surface 37 that is a surface of a not-blade-surface form. Flat surface 37 has a form that does not contribute to the blowing by propeller fan 52, and is flat in this embodiment. Flat surface 37 is formed between blade surfaces 36M and 36N. Flat surface 37 is arranged coaxially to center axis 101, and extends radially outward from boss hub 41. In a direction of a line connecting blade surfaces 36M and 36N, flat surface 37 has a larger width than boss hub 41.

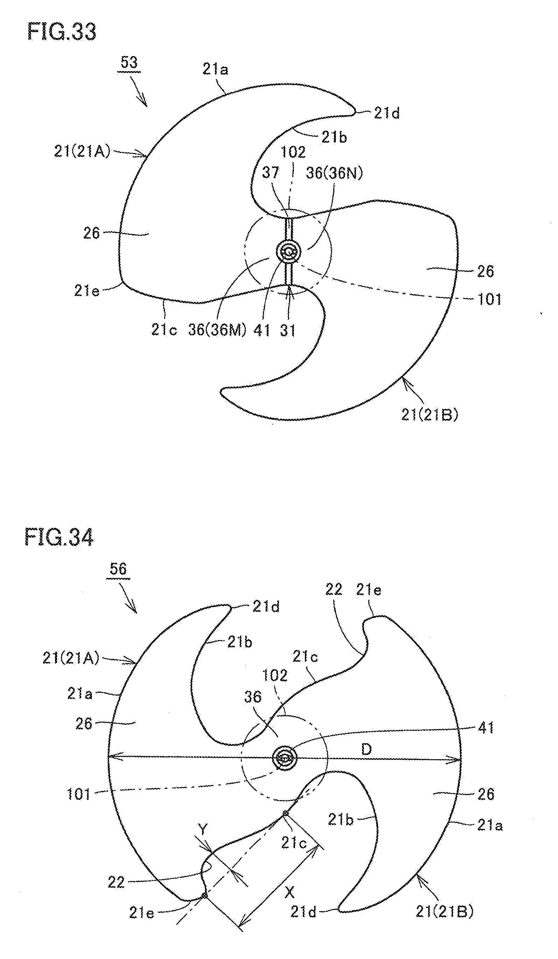

Fig. 33 is a plan showing a modification of the propeller fan in Figs. 31 and 32. Fig. 33 corresponds to Fig. 32. Referring to Fig. 33, a propeller fan 53 according to this modification has flat surface 37 of which width in the direction of the line connecting between blade surfaces 36M and 36N is smaller than that of boss hub 41.

In the case where connection portion 31 has flat surface 37, connection portion 31 may have blade surface 36 contributing to the blowing, whereby the blowing performance can likewise be improved. As is done in the modification shown in Fig. 33, the width of flat surface 37 can be minimized as far as possible so that the areas of blade surfaces 36M and 36N can be increased, and the blowing performance can be effectively improved.

Propeller fans 52 and 53 according to the fifth embodiment of the invention having the above structure can achieve substantially the same effect as the firs embodiment.

### (Sixth Embodiment)

A propeller fan of a sixth embodiment of the invention basically and substantially has the same structure as propeller fan 10 according to the first embodiment. Description of the same structures is not repeated.

Fig. 34 is a plan showing a propeller fan according to the sixth embodiment of the invention. Referring to Fig. 34, a propeller fan 56 according to the embodiment has concave portions 22 formed at rear edges 21c of blades 2 1 A and 21B, respectively. Each concave portion 22 is hollowed from rear edge 21c of blade 21 toward front edge 21b, i.e., in a direction opposite to the rotational direction of the blades 21. Concave portion 22 is formed to have trailing blade edge 21e of a crescent- or scythe-like form.

In this embodiment, X indicates a length of the line extending between the opposite ends of concave portion 22 and, when the opposite ends are not clear, X indicates a length of a common tangential line with respect to the opposite ends. Length X is equal to or larger than 0.33 times outer diameter D of the blades (0.33 ≤ X/D), and a length Y from the deepest position of the concave portion to the above line extending between the opposite ends of the concave portion, or to the above tangential line is equal to or smaller than 0.068 times outer diameter D of the blades (Y/D ≤ 0.068).

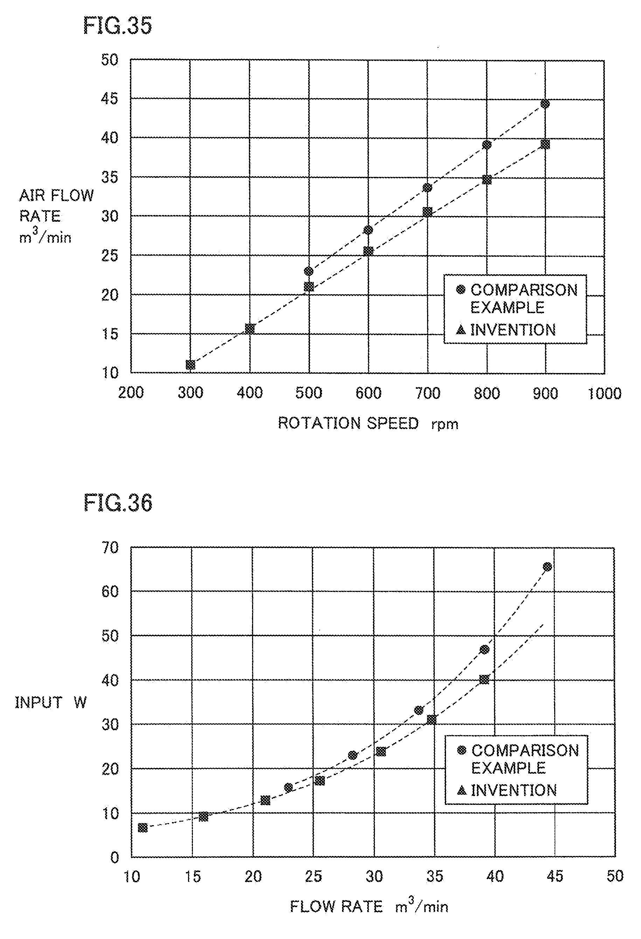

Fig. 35 is a graph indicating a relationship between the rotation speed of the propeller fan and the air flow rate in the sixth embodiment of the invention. Referring to Fig. 35, propeller fan 56 (outer diameter D = 460 mm, X/D = 0.37 and Y/D = 0.068) according to the embodiment shown in Fig. 34 and propeller fan 110 for comparison in Fig. 9 were used to measure the air flow rates at various rotation speeds.

Fig. 36 is a graph showing a relationship between the air flow rate of the propeller fan and the power consumption of the drive motor according to the sixth embodiment of the invention. Referring to Fig. 36, propeller fan 56 (outer diameter D = 460 mm, X/D = 0.37 and Y/D = 0.068) according to the embodiment shown in Fig. 34 and propeller fan 110 for comparison in Fig. 9 were used to measure the power consumption of the drive motor at various rotation speeds.

Referring to Figs. 35 and 36, the provision of concave portions 22 reduces the area of the blades to reduce efficiently a drag or resistance. Since the area of blades decreases, the air flow rate at a constant rotation speed decreases, but the drag efficiently decreases so that the power consumption can be reduced when the air flow rate is constant.

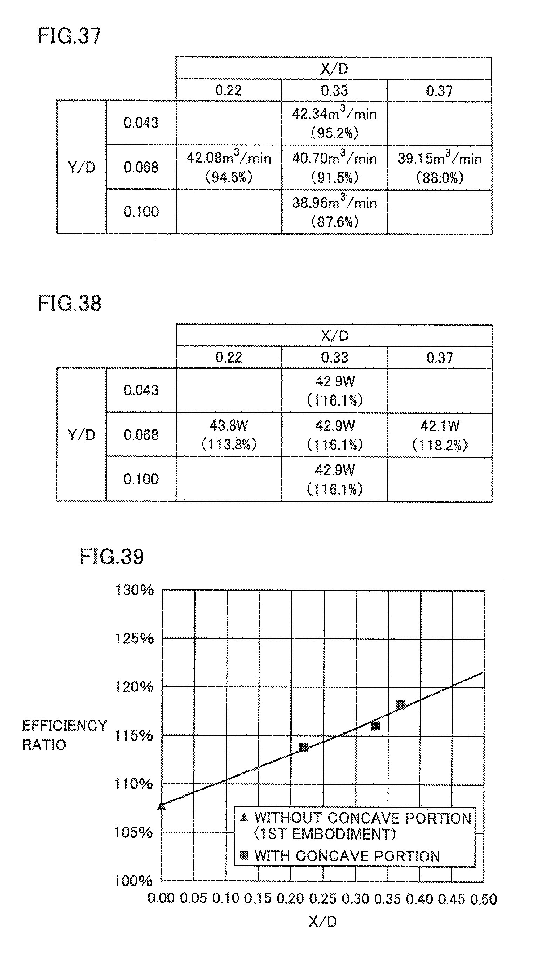

Fig. 37 illustrates, for comparison, the air flow rates exhibited corresponding to the same rotation speed. Fig. 37 shows values of the air flow rates attained when the propeller fans (outer diameter D = 460 mm) having different values of X/D and Y/D are used and the rotation speed is 900 rpm. A value under each flow rate indicates a ratio of the air flow rate with respect to the air flow rate (44.49 m³/min) of propeller fan 110 for comparison in Fig. 9.

Fig. 38 illustrates, for comparison, the power consumptions of the drive motors exhibited corresponding to the same air flow rate. Fig. 38 shows values of the power consumptions of the drive motor attained when the propeller fans (outer diameter D = 460 mm) having different values of X/D and Y/D are used and the air flow rate is 40 m³/min. A value under each power consumption indicates a ratio of the power consumption with respect to the power consumption (49.8 W) exhibited by propeller fan 110 for the comparison in Fig. 9.

Referring to Figs. 37 and 38, as Y/D changes while X/D is constant, the air flow rate at the constant rotation speed increases in accordance with decreasing of Y/D, and the power consumption at the constant rotation speed is substantially constant. By employing concave portion 22 satisfying the relationship of (Y/D ≤ 0.068), it is possible to reduce more effectively the decreasing ratio of the air flow rate with respect to the air flow rate of propeller fan 110 for comparison shown in Fig. 9.

As X/D changes while Y/D is substantially constant, the power consumption at the constant air flow rate decreases according to increase in X/D. By employing concave portion 22 satisfying the relationship of (0.33 ≤ X/D), it is possible to increase more effectively the relative efficiency with respect to the power consumption of propeller fan 110 for comparison shown in Fig. 9.

Fig. 39 is a graph illustrating, for comparison, the power consumption of the drive motor exhibited when X/D changes, Y/D is constant (= 0.068) and the air flow rate is constant. The ordinate in the figure gives a relative efficiency that is a ratio of the power consumption attained by propeller fan 56 in Fig. 34 with respect to that of propeller fan 110 for comparison in Fig. 9 when the air flow rate is 40 m³/min.

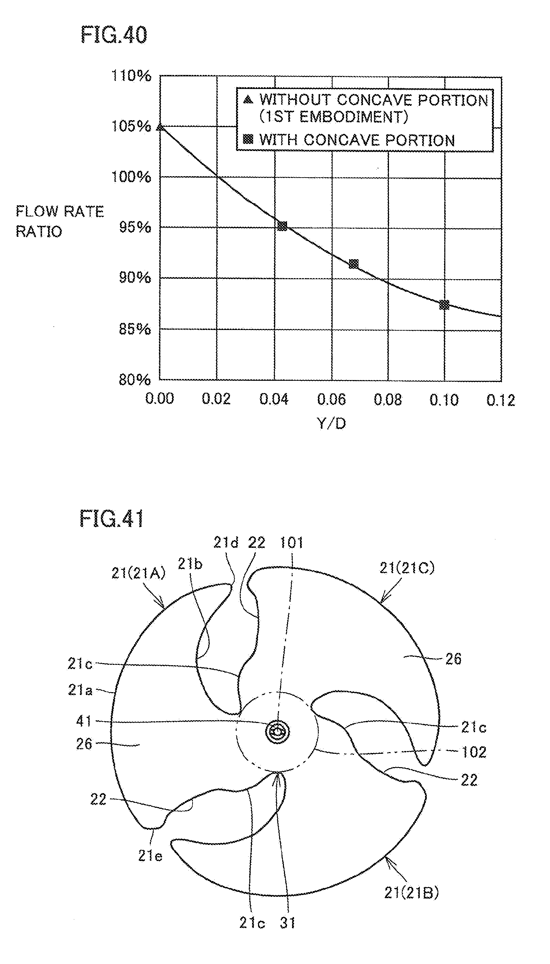

Fig. 40 is a graph illustrating, for comparison, the air flow rate exhibited when Y/D changes, X/D is constant (= 0.33) and the rotation speed is constant. The ordinate in the figure gives a relative ratio of the air flow rate that is attained by propeller fan 56 in Fig. 34 with respect to that of propeller fan 110 for comparison in Fig. 9 when the rotation speed is 900 rpm.

In propeller fan 56 shown in Fig. 34, since concave portion 22 is formed at rear edge 21c of blade 21, the value of X/D does not exceed 0.5. Referring to Fig. 39, concave portion 22 is more preferably formed to satisfy the relationship of (0.37 ≤ X/D < 0.5). The case where the value of Y/D is zero corresponds to propeller fan 10 of the first embodiment. Referring to Fig. 40, concave portion 22 is more preferably formed to satisfy the relationship of (0 < Y/D ≤0.043).

The mechanism of the operations and effects achieved by concave portion 22 will be described below.

When a resistant object causing a large pressure loss such as a heat exchanger is present in an air flow path, the propeller fan is likely to cause such a phenomenon that a flow from a central portion of the fan, i.e., a portion of a low peripheral speed separates from the blade surface.

When the pressure loss is extremely large and may exceed the capacity of the fan, the separation occurs throughout the blade surfaces of the fan. When the pressure loss is within the capacity of the fan, the separation occurs on a part (a region near the center) of the blade surfaces of the fan.

When the complete separation occurs in the hatched portion in Fig. 15 (i.e., the region where the propeller fan according to the embodiment is superior to the propeller fan for the comparison), the performance of the propeller fan according to the embodiment lowers similarly to the propeller fan for the comparison. When there is a method of effectively suppressing this separation, the invention can exhibit its effect to the maximum extent.

Usually, the pressure loss is present in the air flow path, and the portion near the center of the blades is in such a situation that the separation is likely to occur. It can be assumed that the separation partially occurs in the hatched region in Fig. 15 of the propeller fan according to the embodiment. The following structure is employed for completely preventing the separation in the hatched portion and effectively deriving the effect of the invention.

Thus, a vortex (blade tip vortex) occurring on leading blade edge 21d is guided to this hatched portion to refill it with kinetic energy. By forming concave portion 22 at rear edge 21 c, the tip vortex can be fixed in this position so that the region of the hatched portion in Fig. 15 can always be refilled with the kinetic energy. Consequently, the separation in the region of the hatched portion in Fig. 15 is suppressed, and the effect of the invention can be efficiently derived.

Fig. 41 is a plan showing a modification of the propeller fan in Fig. 34. In the embodiment shown in Fig. 41, three blades 21A, 21B and 21C are provided at their rear edges 21c with concave portions 22, respectively. Concave portion 22 has substantially the same form as concave portion 22 formed in propeller fan 56 having the two blades. When concave portions 22 are formed in the propeller fan having the three blades, it is possible to reduce the power consumption at the constant air flow rate, while reducing the area of the blades to reduce efficiently the drag.

Propeller fan 56 thus structured according to the sixth embodiment of the invention can achieve substantially the same effect as that of the first embodiment.

### (Seventh Embodiment)

The propeller fan according to a seventh embodiment of the invention basically and substantially has the same structure as propeller fan 10 according to the first embodiment. Description of the same structures is not repeated.

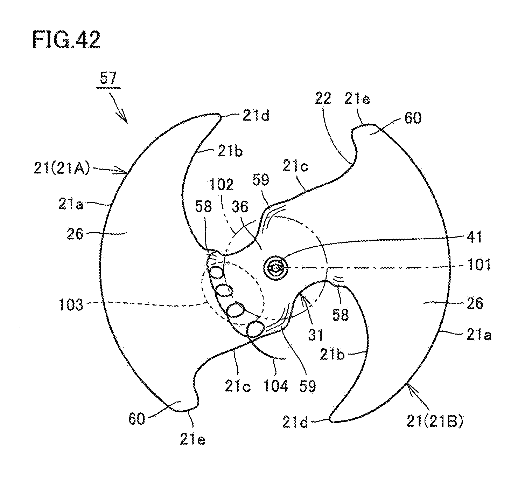

Fig. 42 is a plan showing the propeller fan according to the seventh embodiment of the invention. Referring to Fig. 42, a propeller fan 57 according to the embodiment has convex portions 58, i.e., first convex portions formed at front edges 21b of blades 21A and 21B, respectively. Convex portion 58 has a round form protruding toward the suction surface side (intake side) of blade surface 21. When viewed from the suction surface side, convex portion 58 has a curved surface rising from the surface of blade surface 26. Convex portion 58 is formed near the periphery of connection portion 31.

According to the structure described above, convex portions 58 form a vortex 104 according to the rotation of blades 21, and vortex 104 thus formed moves on blade surfaces 26 and 36. This vortex 104 prevents the separation or peeling of the air flow that occurs in a region 103 on blade surfaces 26 and 36, or in the region of the hatched portion in Fig. 15. Consequently, the performance and efficiency of the fan are improved, and the noises due to the separation can be reduced. The effect of suppressing the separation on blade surfaces 26 and 36 improves the pressure-flow rate characteristics so that the air blowing can be performed corresponding to the high pressure loss.

In this embodiment, a convex portion 59 expanding oppositely to the rotational direction of blades 21 is formed as a second convex portion in a coupling portion between connection portion 31 1 and each of rear edges 21c of respective blades 21 A and 21B. Convex portion 59 formed at rear edge 21c of blade 21A protrudes toward front edge 21b of blade 21B, and convex portion 59 formed at rear edge 21c of blade 21B protrudes toward front edge 21b of blade 21A.

In this embodiment, a convex portion 60 expanding oppositely to the rotational direction of blades 21 is formed as a third convex portion in a coupling portion between the outer peripheral portion (outer edge 21 a) of each blade 21 and rear edge 21c of each of blades 21A and 21B. Convex portion 60 formed at trailing blade edge 21e of blade 21A protrudes toward leading blade edge 21d of blade 21B, and convex portion 60 formed at trailing blade edge 21e of blade 21 B protrudes toward leading blade edge 21 d of blade 21A.

The above structure increases a chord length of the portion provided with convex portions 59 and 60, and can blow the air flow by a larger force. In general, the blowing capacity is small in a position where a radius of rotation is short. However, the effect of extending the chord by provision of convex portion 59 can achieve a larger blowing capacity in spite of the fact that the radius of rotation is small. The fan has a large blowing capacity in a position where the radius of rotation is large. The chord of the region where the largest blowing capacity is obtained is extended so that the air flow rate of the fan at the constant rotation speed can be increased, and the larger blowing capacity can be obtained.

The embodiment has been described in connection with propeller fan 57 provided with convex portions 58 to 60. However, the convex portion(s) may be formed of one or an appropriate combination of convex portions 58 to 60.

Propeller fan 57 thus structured according to the seventh embodiment of the invention can achieve substantially the same effect as the first embodiment.

The structures of the various propeller fans have been described as the first to seventh embodiments. However, these are not restrictive, and the structures of the propeller fans described in connection with the first to seventh embodiment can be appropriately combined to configure a new propeller fan.

### (Eight Embodiment)

This embodiment will now be described in connection with a structure of molding dies for molding propeller fan 10 according to the first embodiment from resin.

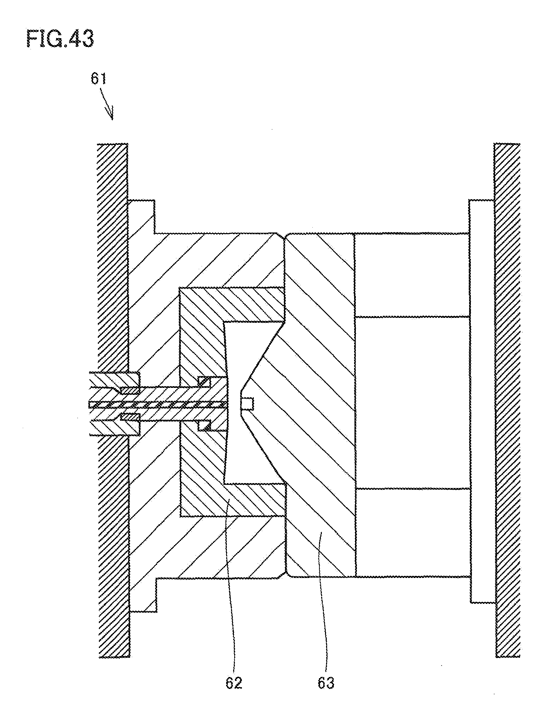

Fig. 43 is a cross section showing the molding dies used for producing the propeller fan in Fig. 1. Referring to Fig. 43, molding dies 61 have a stationary die 62 and a movable die 63. Stationary and movable dies 62 and 63 define a cavity having substantially the same shapes as propeller fan 10 for injecting flowable resin thereinto.

Molding die 61 may be provided with a heater (not shown) for increasing the flowability of the resin injected into the cavity. Such arrangement of the heater is particularly effective when synthetic resin having an increased strength such as glass-filled AS resin is used.

Molding die 61 shown in Fig. 43 is employed on the assumption that stationary die 62 forms a pressure surface of propeller fan 10, and movable die 63 forms a suction surface. However, stationary die 62 may form the suction surface of propeller fan 10, and movable die 63 may form the pressure surface.

The propeller fan is made of metal, and is integrally formed by draw forming of press working. A thick metal plate cannot be used for such drawing without difficulty, and increases a mass or weight so that a thin metal plate is generally used. In this case, a large propeller fan cannot have a sufficient strength (rigidity) without difficulty. Also, a part that is formed of a metal plate thicker than the blade portion and is called "spider" may be used for fixing the blade portion to the rotation axis. However, this results in a problem that the mass is large, a fan balance is impaired. In general, the metal plate used for it is thin and has a constant thickness, which results in a problem that the blade portion cannot have a blade-like sectional form.

Conversely, the above problems can be collectively overcome by using the resin for forming propeller fan 10.

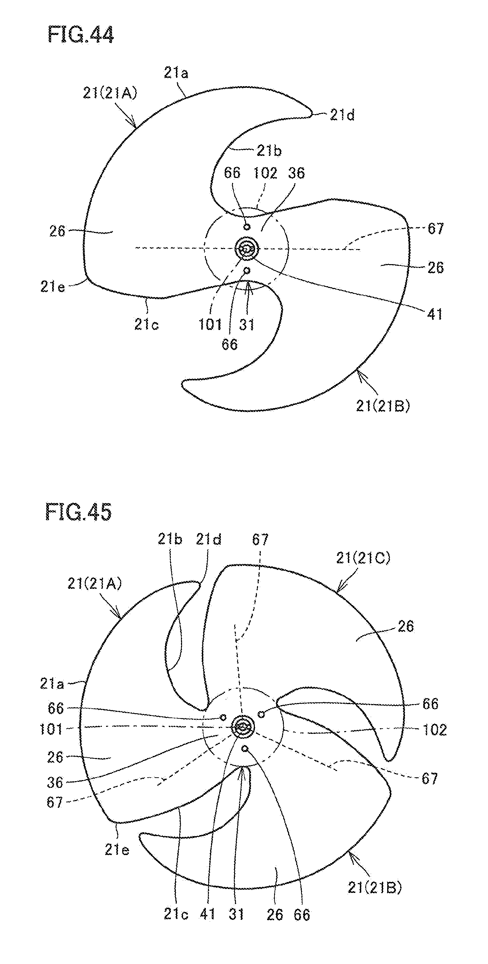

Fig. 44 is a plan showing an example of positions where gates are located in the molding die for producing a propeller fan with two blades of the embodiment. Fig. 45 is a plan showing an example of the positions where the gates are located in the molding die for producing a propeller fan with three blades according to the embodiment.

Referring to Figs. 44 and 45, molding dies 61 have gates 66 for supplying or injecting the resin into the cavity defined by stationary and movable dies 62 and 63 in Fig. 43. Preferably, gates 66 are formed in connection portion 31 and are located in positions corresponding to boundaries each defined between front and rear edge 21b and 21c of neighboring blades 21. In the case of the two-blade fan, these are formed in the boundaries between front edge 21b of blade 21A and rear edge 21c of blade 21B, and between front edge 21b of blade 21B and rear edge 21c of blade 21A, respectively. In the case of the three-blade fan, these are formed in the boundaries between front edge 21b of blade 21A and rear edge 21c of blade 21C, between front edge 21b of blade 21C and rear edge 21c of blade 21B, and between front edge 21b of blade 21B and rear edge 21c of blade 2 1 A, respectively.

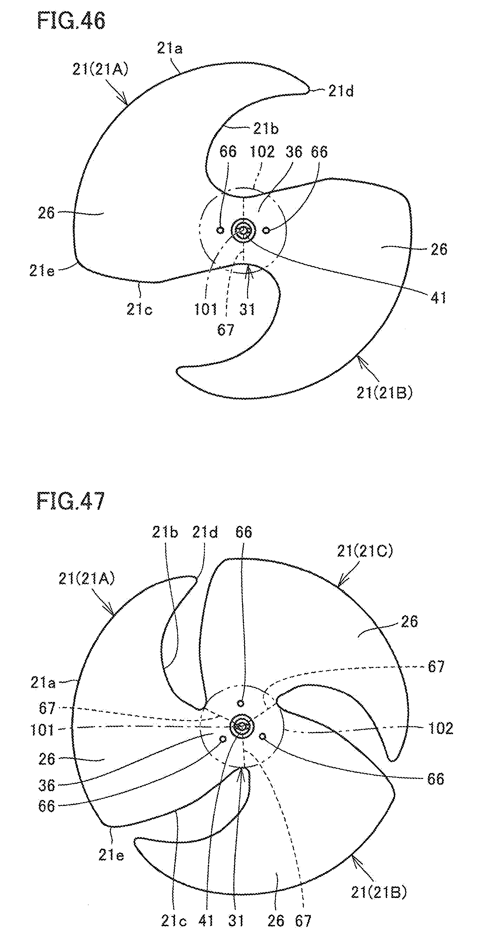

Figs. 46 and 47 show comparison examples of the propeller fans that have the gates in positions other than those shown in Figs. 44 and 45, respectively.

Referring to Figs. 46 and 47, when gate 66 is located in the position shown in Fig. 46 or 47 other than the foregoing positions, a weld line 67 (where the flows of flowable resin joined together in the dies so that a crack is liable to occur due to a low strength) may occur in the boundary between front edge 21b of each blade 21 and rear edge 21c of the neighboring blade 21. In the propeller fan according to the embodiment, stress concentration occurs in the boundary between front edge 21b of each blade 21 and rear edge 21c of neighboring rear edge 21 c so that a crack is liable to occur along weld line 67, and the breaking strength of the fan is remarkably low.

Referring to Figs. 44 and 45, however, gates 66 are formed in connection portion 31 and particularly in the positions that correspond to the respective boundaries each defined between front and rear edges 21b and 21c of neighboring blades, so that weld line 67 can be produced in the position that does not significantly lower the breaking strength of the fan as shown in the figures. Thus, the lowering of the breaking strength of the fan can be prevented.

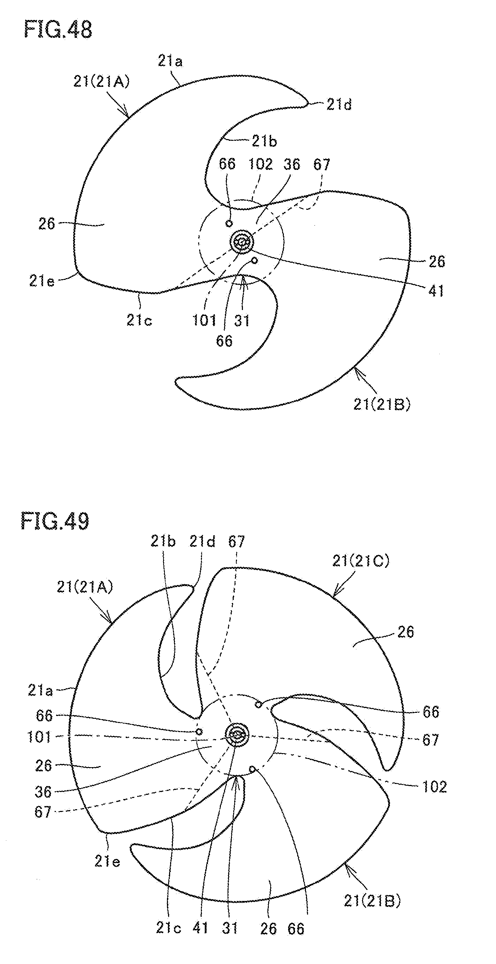

Fig. 48 is a plan showing another example of the positions where the gates are located in the molding die for producing the two-blade propeller fan according to the embodiment. Fig. 49 is a plan showing another example of the positions where the gates are located in the molding die for producing the three-blade propeller fan according to the embodiment.

Referring to Figs. 48 and 49, gates 66 are preferably located in connection portion 31 continuing to the base portions of blades 21, and particularly in the positions corresponding to the vicinities of the front edges 21b, i.e., in the positions that are circumferentially closer to front edges 21b of blades 21 than rear edges 21c of the same blades, respectively.

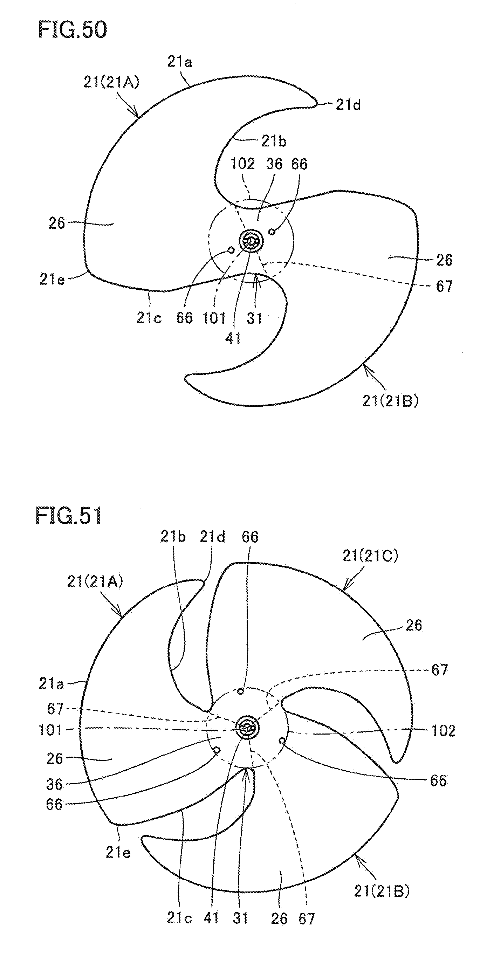

Figs. 50 and 51 show, as examples for comparison, propeller fans provided with gates in positions other than those shown in Figs. 48 and 49.

Referring to Figs. 50 and 51, when gates 66 are located, e.g., in the illustrated positions shifted from the foregoing positions, weld line 67 may occur in the positions on connection portion 31 continuing to the base portion of blades 21, and particularly in the positions near front edges 21b. In the propeller fan according to the embodiment, since the stress concentration occurs in the positions on connection portion 31 continuing to the base portions of blades 21, and particularly in the positions near front edge 21b, the crack is liable to occur along weld line 67, and the breaking strength of the fan remarkably lowers.

Referring to Figs. 48 and 49, however, gates 66 are arranged in the positions on connection portion 31 continuing to the base portions of blades 21, and particularly in the positions near front edge 21b, and this structure can form weld line 67 in the illustrated position that does not significantly lower the breaking strength of the fan. Consequently, the lowering of the breaking strength of the fan can be prevented.

Then, description will be given on an outdoor unit of an air conditioner as an example of a fluid feeder having propeller fan 10 according to the first embodiment.

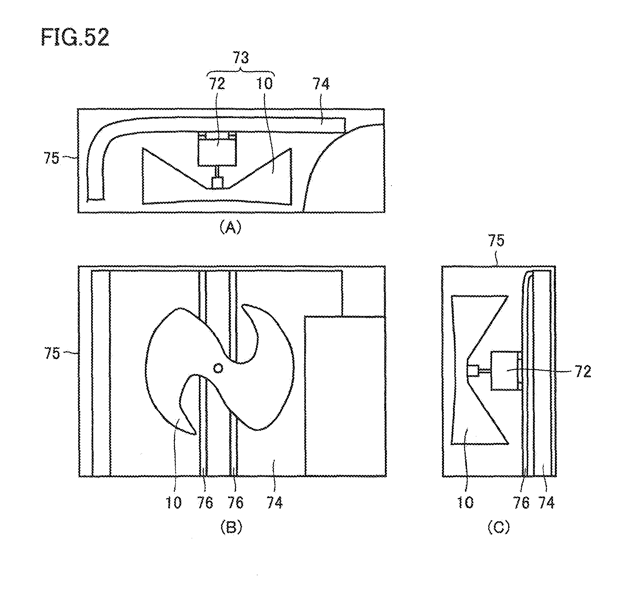

Fig. 52 shows an outdoor unit of an air conditioner with the propeller fan in Fig. 1. Referring to Fig. 52, an outdoor unit 75 of the air conditioner includes a blower 73 having propeller fan 10 according to the first embodiment and a drive motor 72. Blower 73 feeds a fluid. Outdoor unit 75 has an outdoor heat exchanger 74, and performs efficient heat exchange, using blower 73. Blower 73 is arranged in outdoor unit 75 by a motor angle 76.

In this structure, outdoor unit 75 has propeller fan 10 already described in connection with the first embodiment, and therefore can suppress generation of noises to attain low operation noises.

Further, propeller fan 10 improves the air flow efficiency so that the energy consumption of outdoor unit 75 can be low. Similar effect can be achieved by using the propeller fan already described in connection with one of the second to seventh embodiments.

In this embodiment, the outdoor unit of the air conditioner has been described as an example of the fluid feeder. However, substantially the same effect can be achieved by applying the propeller fan of the invention to various devices for feeding the fluid such as an air purifier, a humidifier, an electric fan, a fan heater, a cooling device and a ventilating device.

Technical ideas of the propeller fan according to the invention can be summarized as follows.

The invention is a propeller fan that has a plurality of blades for blowing air by rotation, and is characterized in that base portions of the plurality of blades are continuously coupled together.

Also, the invention is a propeller fan that has a plurality of blades for blowing air by rotation, and is characterized in that the propeller fan has a convex portion including a rotation shaft located coaxially to a rotation center of the blades and protruding toward an inlet side and/or an outlet side, and at least a part of the base portions of the blades is not continuously connected to the convex portion.

Further, the invention is a propeller fan that has a plurality of blades for blowing air by rotation, and is characterized in that the minimum length of the convex portion from the rotation center is smaller than the minimum length of the base portions of the blades from the rotation center. According to this structure, the convex portion is small so that the blades have a large area and the propeller fan has a small mass. Since the blades have the large area, the blades can be effectively used even in the rotation-central portion that is conventionally a dead angle region, and the air flow rate can be increased when the rotation speed is constant. Since the propeller fan has a small mass, this reduces a load on the motor, and can reduce the power consumption at the constant air flow rate.

Further, according to the invention, the propeller fan described above is characterized in that the propeller fan includes a front edge located on a forward side in the rotational direction, a rear edge located on the opposite side in the rotational direction and a peripheral portion extending in a circumferential direction between a tip end portion of the front edge and a tip end portion of the rear edge, and the base portion of the front edge of each of blades and the base portion of the rear edge of the neighboring blade match with each other and are continuously coupled together.

Further, according to the invention, the propeller fan described above is characterized in that the front edge of each of the plurality of blades is coupled in a direction from the intake side to the outlet side to the rear edge of the neighboring blade.

Further, according to the invention, the propeller fan described above is characterized in that the rear edge has a concave portion (recessed portion) extending toward the front edge, line between the opposite ends of the concave portion, or a common tangential line with respect to the opposite ends that are nor clear has a length equal to or larger than 0.33 times the outer diameter of the fan, and a length from the line between the opposite ends of the concave portion or from the above tangential line to the deepest position of the concave portion is equal to or smaller than 0.068 times the outer diameter of the fan. This structure reduces the area of the blades to reduce effectively a drag. Since the area of the blades decreases, the air flow rate decreases when the rotation speed is constant, but the drag effectively decreases so that the power consumption can be reduced when the air flow rate is constant. It is assumed that X (the width of the concave portion) indicates the length of the line between the opposite ends of the concave portion or the length of the above tangential line, and Y (depth of the concave portion) indicates the length from the line between the opposite ends of the concave portion or from the above tangential line to the deepest position of the concave portion. When Y changes while X is substantially constant, the ratio of the air flow rate with respect to a constant rotation speed decreases, and the ratio of input with respect to a constant air flow rate is substantially constant. Therefore, it is desirable to reduce Y. When X changes while Y is substantially constant, the ratio of the air flow rate with respect to a constant rotation speed decreases, and the ratio of input with respect to a constant air flow rate decreases. Therefore, it is desired to decrease X when the air flow rate with respect to a constant rotation speed is to be increased, and to increase X when the air flow rate with respect to a constant rotation speed is to be reduced.

Further, according to the invention, the propeller fan described above is characterized in that it is molded from resin. This structure can provide the blade portion having a section of a blade-like form in contrast to the case where it is made of metal. Further, this structure can reduce a mass of the propeller fan of large sizes. Since this structure can provide the blade portion having a section of a blade-like form in contrast to the case where it is made of metal, the blowing performance can be improved. Since this structure can reduce a mass of the propeller fan of large sizes, the load on the motor can be reduced, and the power consumption can be reduced.

Further, the invention is a fluid feeder provided with the propeller fan described above.

Further, the invention is a molding die for molding the propeller fan described above from resin.

The present invention is a propeller fan that has a plurality of blades for blowing air by rotation, and has a connection portion continuously coupling base portions of the plurality of blades, and is characterized in that the propeller fan has a convex portion including a rotation shaft located coaxially to a rotation center of the blades and protruding toward an inlet side and/or an outlet side, a circumferential width of the base portion of the blade is smaller than a circumferential width of the convex portion, and a rotation center portion on the outlet side is provided with a flat surface portion larger than a circumferential width of the convex portion on the intake side.

This structure can improve the blowing performance of the propeller fan, and allows axial stacking (i.e., stacking in the direction of height) of the propeller fans by a very simple manner for storing or transporting them.

Further, the present invention is a propeller fan that has a plurality of blades for blowing air by rotation, and has a connection portion continuously coupling base portions of the plurality of blades, and is characterized in that the propeller fan has a convex portion including a rotation shaft located coaxially to a rotation center of the blades and protruding toward an inlet side and/or an outlet side, a circumferential width of the base portion of the blade is smaller than a circumferential width of the convex portion, a rotation center portion on the outlet side is provided with an annular protrusion, and a circumferential width of an inner side of the annular protrusion is equal to or larger than a circumferential width of the outer side of the convex portion on the intake side.

This structure can improve the blowing performance of the propeller fan. Also, horizontal shifting or deviation can be prevented so that this structure allows axial and stable stacking (i.e., stable stacking in the direction of height) of the propeller fans for storing or transporting them. Further, a balance piece may be attached to the annular protrusion for eliminating imbalance of the propeller fan.

Further, the present invention is a propeller fan that has a plurality of blades for blowing air by rotation, and has a connection portion continuously coupling base portions of the plurality of blades, and is characterized in that the propeller fan has a convex portion including a rotation shaft located coaxially to a rotation center of the blades and protruding toward an inlet side and/or an outlet side, a circumferential width of the base portion of the blade is smaller than a circumferential width of the convex portion, and an annular protrusion is arranged on a radially outer side of the convex portion on the intake side.

When the annular protrusion on the intake side has an axial height larger than a height of the convex portion, the above structure improves the blowing performance of the propeller fan, and allows stacking (i.e., stacking in the direction of height) of the propeller fans for storing or transporting them. Further, when the annular protrusion on the intake side has an axial height smaller than a height of the convex portion, a balance piece may be attached to the annular protrusion for eliminating imbalance of the propeller fan.

Further, according to the invention, the propeller fan described above is characterized in that it is molded from resin. This structure can provide the blade portion having a section of a blade-like form in contrast to the case where it is made of metal. Further, this structure can reduce a mass of the propeller fan of large sizes. Since this structure can provide the blade portion having a section of a blade-like form in contrast to the case where it is made of metal, the blowing performance can be improved. Since this structure can reduce a mass of the propeller fan of large sizes, the load on the motor can be reduced, and the power consumption can be reduced.

Further, the invention is a fluid feeder provided with the propeller fan described above.

Further, the invention is a molding die for molding the propeller fan described above from resin.

Although the present invention has been described and illustrated in detail, it is clearly understood that the same is by way of illustration and example only and is not to be taken by way of limitation, the scope of the present invention being interpreted by the terms of the appended claims.

### INDUSTRIAL APPLICABILITY

The present invention is primarily applied to a fluid feeder such as an outdoor unit of an air conditioner, an air purifier, a humidifier, a dehumidifier, a fan heater, a cooling device and a ventilating device.

## Claims

1. A propeller fan, wherein
a plurality of blades for blowing are coupled together with a space kept in a rotational direction therebetween, and
a coupled region has a form for performing the blowing according to rotation.

2. The propeller fan according to claim 1, wherein
said coupled region has a blade-surface-like form for performing the blowing according to the rotation.

3. The propeller fan according to claim 1 or 2, wherein
a member for performing rotational driving around said coupled region is integrally arranged.

4. The propeller fan according to one of claims 1 to 3, wherein
said plurality of blades and the coupled region are integrally molded.

5. A propeller fan comprising:
a plurality of blades circumferentially spaced from each other for performing blowing according to rotation; and
a connection portion having a blade-surface-like surface for performing the blowing according to the rotation, and connecting base portions of said plurality of neighboring blades.

6. The propeller fan according to claim 5, wherein
said connection portion extends radially outward from a rotation shaft for driving and rotating the propeller fan.

7. The propeller fan according to claim 5 or 6, wherein
said connection portion forms said blade-surface-like surface.

8. The propeller fan according to one of claims 5 to 7, wherein
said plurality of blades and said connection portion form a blade surface having an integral and continuously smooth form.

9. The propeller fan according to one of claims 5 to 8, further comprising:
a rotation shaft arranged coaxially to a rotation center of said blades and protruding from said connection portion toward at least one of the intake side and the outlet side.

10. The propeller fan according to claim 9, wherein
when the propeller fan is viewed in the direction of the rotation axis, a minimum distance from the rotation axis to an outer periphery of said connection portion on a line perpendicularly crossing the rotation axis is longer than a distance from the rotation axis to the outer periphery of said rotation shaft on said line.

11. The propeller fan according to one of claims 5 to 10, wherein
said blade has a front edge located on a forward side in the rotational direction and a rear edge located on the opposite side in the rotational direction, and
a base portion of said front edge of a first blade included among said plurality of blades is connected to a base portion of said rear edge of a second blade neighboring to said first blade.

12. The propeller fan according to claim 11, wherein
said connection portion extends from the intake side toward the outlet side as the position moves from the base portion of said front edge toward the base portion of said rear edge.

13. The propeller fan according to claim 11, wherein
said connection portion continues to the blade surface of said blade and extends in a blowing direction from the intake side toward the outlet side as the position moves from the base portion of said front edge toward the base portion of said rear edge.

14. The propeller fan according to claim 11, wherein
said connection portion is configured to have a function of blowing air in the blowing direction of the propeller fan from the intake side to the outlet side.

15. The propeller fan according to one of claims 11 to 14, wherein
said front edge is provided with a first convex portion protruding toward a suction surface side of the blade.

16. The propeller fan according to one of claims 11 to 15, wherein
a coupling portion between said rear edge and said connection portion is provided with a second convex portion protruding oppositely to the rotational direction of said blade.

17. The propeller fan according to one of claims 11 to 16, wherein
a coupling portion between said rear edge and an outer peripheral portion of said blade is provided with a third convex portion protruding oppositely to the rotational direction of said blade.

18. The propeller fan according to one of claims 11 to 17, wherein
said rear edge is provided with a concave portion hollowed in the rotational direction of said blade.

19. The propeller fan according to claim 18, wherein
a length X of a line between opposite ends of said concave portion or a common tangential line with respect to unclear opposite ends of said concave portion is equal to or larger than 0.33 times an outer diameter of said blades, and
a length Y from the line between the opposite ends of said concave portion or said tangential line to the deepest position of said concave portion is equal to or smaller than 0.068 times the outer diameter of said blades.

20. The propeller fan according to one of claims 5 to 19, wherein
said plurality of blades and said connection portion have a thin-thickness form, and are formed integrally with each other.

21. The propeller fan according to one of claims 5 to 20, wherein
said blade-surface-like surface is formed continuously to the blade surface of said blade.

22. The propeller fan according to claim 21, wherein
a blade surface of a first blade among said plurality of blades and a blade surface of a second blade neighboring to said first blade are formed to continue to each other through said blade-surface-like surface.

23. The propeller fan according to one claim 21, wherein
said blade-surface-like surface includes a first portion continuing from a blade surface of a first blade among said plurality of blades, and a second portion continuing from a blade surface of a second blade neighboring to said first blade, and
said connection portion further has a surface of a not-blade-surface form formed between said first and second portions and arranged coaxially to the rotation center of said blades.

24. The propeller fan according to one of claims 1 to 23, wherein
said propeller fan is formed by twisting a single plate-like member.

25. The propeller fan according to one of claims 1 to 23, wherein
said propeller fan is made of a thin integral member having a curved surface.

26. The propeller fan according to one of claims 1 to 23, wherein
said propeller fan is molded from resin.

27. A fluid feeder comprising the propeller fan according to one of claims 1 to 26.

28. A molding die used for molding the propeller fan according to one of claims 1 to 23 from resin.

29. The molding die according to claim 28, comprising:
a gate for supplying flowable resin, wherein
said blade has a front edge located on a forward side in the rotational direction and a rear edge located on the opposite side, and
said gate is formed in said connection portion or said coupled region, and is located in a position corresponding to a boundary between said front edge of the first blade among said plurality of blades and said rear edge of the second blade neighboring to said first blade.

30. The molding die according to claim 28, comprising:
a gate for supplying flowable resin, wherein
said blade has a front edge located on a forward side in the rotational direction, and
said gate is formed in said connection portion continuing to the base portion of said blade or said coupled region, and is located in a position corresponding to a vicinity of said front edge.

31. A propeller fan comprising:
a plurality of blades circumferentially spaced from each other for performing blowing according to rotation;
a connection portion having a blade-surface-like surface for performing the blowing according to the rotation, and connecting base portions of the plurality of neighboring blades;
a rotation shaft arranged coaxially to a rotation center of said blades, protruding from the intake side of said connection portion, and having an end surface parallel to a plane perpendicular to a direction of a rotation axis of said blades,
a minimum distance from the rotation axis to an outer periphery of said connection portion on a line perpendicularly crossing the rotation axis being longer than a distance from the rotation axis to the outer periphery of said rotation shaft on said line, when the propeller fan is viewed in the direction of the rotation axis; and
a flat surface portion arranged on the outlet side of said connection portion, having an outer form larger than an outer form of said rotation shaft when projected in a direction of the rotation axis of said blades, and having a flat surface parallel to said end surface.

32. The propeller fan according to claim 31, further comprising:
an annular protrusion protruding from the outlet side of said connection portion, and arranged coaxially to a rotation center of said blades, wherein
said annular protrusion has an inner form larger than the outer form of said rotation shaft when projected in the direction of the rotation axis of said blades.

33. A propeller fan comprising:
a plurality of blades circumferentially spaced from each other for performing blowing according to rotation;
a connection portion having a blade-surface-like surface for performing the blowing according to the rotation, and connecting base portions of the plurality of neighboring blades;
a rotation shaft arranged coaxially to a rotation center of said blades, and protruding from the intake side of said connection portion,
a minimum distance from the rotation axis to an outer periphery of said connection portion on a line perpendicularly crossing the rotation axis being longer than a distance from the rotation axis to the outer periphery of said rotation shaft on said line, when the propeller fan is viewed in the direction of the rotation axis; and
an annular protrusion arranged on the intake side of said connection portion, arranged radially outside said rotation shaft and protruding to a position higher than said rotation shaft in the direction of the rotation axis of said blades.

34. The propeller fan according to one of claims 31 to 33, wherein
a blade surface of a first blade among said plurality of blades continues to a second blade surface of a second blade neighboring to said first blade through said blade-surface-like surface.

35. The propeller fan according to one of claims 31 to 34, wherein
said propeller fan is molded from resin.

36. A fluid feeder comprising the propeller fan according to one of claims 31 to 35.

37. A molding die used for molding the propeller fan according to one of claims 31 to 35 from resin.
